# EUROPEAN PATENT APPLICATION

(11) **EP 3 869 427 A1**
(43) Date of publication of application: **25.08.2021**
(21) Application number: 20158335.8
(22) Date of filing: 19.02.2020
(51) Int. Cl.: G06Q 10/00, A24F 40/50

(54) **SMOKING SUBSTITUTE DEVICE**

(71) Applicant: NERUDIA LIMITED, Liverpool Merseyside L24 9HP (GB)
(72) Inventor: MILLWARD, Timothy, Liverpool L24 9HP, United Kingdom (GB)
(74) Representative: Mewburn Ellis LLP

(57) **Abstract**

A smoking substitute device configured to generate an aerosol from an aerosol forming substrate, the device comprising at least one processor configured to run a machine learning model, wherein the machine learning model is configured to receive usage data relating to usage of the smoking substitute device by a user, and based on that usage data, to determine one or more predicted parameters relating to future usage of the smoking substitute device by the user.

## Description

### TECHNICAL FIELD

The present invention relates to a smoking substitute device configured to run a machine learning model to determine one or more predicted parameters relating to future usage of the smoking substitute device by the user, e.g. so as to predict when one or more events e.g. empty battery events, next activation events, empty consumable events will occur.

### BACKGROUND

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Conventional combustible smoking articles, such as cigarettes, typically comprise a cylindrical rod of tobacco comprising shreds of tobacco which is surrounded by a wrapper, and usually also a cylindrical filter axially aligned in an abutting relationship with the wrapped tobacco rod. The filter typically comprises a filtration material which is circumscribed by a plug wrap. The wrapped tobacco rod and the filter are joined together by a wrapped band of tipping paper that circumscribes the entire length of the filter and an adjacent portion of the wrapped tobacco rod. A conventional cigarette of this type is used by lighting the end opposite to the filter, and burning the tobacco rod. The smoker receives mainstream smoke into their mouth by drawing on the mouth end or filter end of the cigarette.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices may comprise electronic systems that permit a user to simulate the act of smoking by producing an aerosol (also referred to as a "vapour") that is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products. Some smoking substitute systems use smoking substitute articles (also referred to as a "consumables") that are designed to resemble a traditional cigarette and are cylindrical in form with a mouthpiece at one end.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vapourisable liquid, typically referred to (and referred to herein) as "e-liquid", is heated by a heating device to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerin.

A typical vaping smoking substitute device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a sealed tank and heating element which is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, the main body can be reused by connecting it to a new consumable. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu™ e-cigarette. The myblu™ e-cigarette is a closed system device which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heating device, which for this device is a heating filament coiled around a portion of a wick which is partially immersed in the e-liquid. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Another example vaping smoking substitute device is the blu PRO™ e-cigarette. The blu PRO™ e-cigarette is an open system device which includes a main body, a (refillable) tank, and a mouthpiece. The main body and tank are physically and electrically coupled together by screwing one to the other. The mouthpiece and refillable tank are physically coupled together by screwing one of the other, and detaching the mouthpiece from the refillable tank allows the tank to be refilled with e-liquid. The device is activated by a button on the main body. When the device is activated, electrical energy is supplied from the power source to a heating device, which heats e-liquid from the tank to produce a vapour which is inhaled by a user through the mouthpiece.

Another approach for a smoking substitute system is the so-called Heated Tobacco ("HT") approach in which tobacco (rather than an "e-liquid") is heated or warmed to release vapour. HT is also known as "heat not burn" ("HNB"). The tobacco may be leaf tobacco or reconstituted tobacco. The vapour may contain nicotine and/or flavourings. In the HT approach the intention is that the tobacco is heated but not burned, i.e. the tobacco does not undergo combustion.

A typical HT smoking substitute system may include a device and a consumable. The consumable may include the tobacco material. The device and consumable may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable (entrained in the airflow) from the location of vaporisation to an outlet of the consumable (e.g. a mouthpiece), the vapour cools and condenses to form an aerosol for inhalation by the user. The aerosol will normally contain the volatile compounds.

In HT smoking substitute systems, heating as opposed to burning the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

There may be a need for improved design of smoking substitute systems, in particular HT smoking substitute systems, to enhance the user experience and improve the function of the HT smoking substitute system.

An example of the HT approach is the IQOS™ smoking substitute device from Philip Morris Ltd. The IQOS™ smoking substitute device uses a consumable, including reconstituted tobacco located in a wrapper. The consumable includes a holder incorporating a mouthpiece. The consumable may be inserted into a main body that includes a heating device. The heating device has a thermally conductive heating knife which penetrates the reconstituted tobacco of the consumable, when the consumable is inserted into the heating device. Activation of the heating device heats the heating element (in this case a heating knife), which, in turn, heats the tobacco in the consumable. The heating of the tobacco causes it to release nicotine vapour and flavourings which may be drawn through the mouthpiece by the user through inhalation.

A second example of the HT approach is the device known as "Glo"™ from British American Tobacco p.l.c. Glo™ comprises a relatively thin consumable. The consumable includes leaf tobacco which is heated by a heating device located in a main body. When the consumable is placed in the main body, the tobacco is surrounded by a heating element of the heating device. Activation of the heating device heats the heating element, which, in turn, heats the tobacco in the consumable. The heating of the tobacco causes it to release nicotine vapour and flavourings which may be drawn through the consumable by the user through inhalation. The tobacco, when heated by the heating device, is configured to produce vapour when heated rather than when burned (as in a smoking apparatus, e.g. a cigarette). The tobacco may contain high levels of aerosol formers (carrier), such as vegetable glycerine ("VG") or propylene glycol ("PG").

The present inventor(s) have observed that most smoking substitute devices currently on the market are configured to operate in isolation of other devices, which limits the functions the smoking substitute devices can perform.

In the present age of ever increasing connectivity, simply connecting a device to an external network presents a number of challenges. Foremost amongst these is lack of physical bandwidth capable of storing and, in particular, processing the increasing amount of data globally. With projections indicating that in 2020, almost 2 MB of data will be created every second for every person on Earth (DOMO Inc. *Data Never Sleeps 6.0*), the pressure on conventional cloud-based computing is set to be extreme.

The present invention has been devised in light of the above considerations.

### Summary of the Invention

A first aspect of the present invention may provide:
A smoking substitute device comprising:
at least one processor configured to run a machine learning model;
wherein the machine learning model is configured to receive usage data relating to usage of the smoking substitute device by a user, and based on that usage data, to determine one or more predicted parameters relating to future usage of the smoking substitute device by the user.

In this way, the smoking substitute device is itself able to, leveraging the power of machine learning, make predictions about future usage of the smoking substitute device by the user, without any need to communicate with an external device ("edge computing"). This may allow for those predictions to be provided to the user very quickly (e.g. via a feedback device included in the smoking substitute device, within, for example, 3 ms, more preferably within 2 ms), or the predictions could be communicated from the device to an external device without the need to communicate the usage data (on which the predictions were based) to an external device. Indeed, in one or more cases, it may be desirable to retain the usage data on the smoking substitute device to ensure the privacy and security of the data. The predictions made by the smoking substitute device can be used to create a better user experience for the user of the device.

Preferably, the smoking substitute device is configured to generate an aerosol from an aerosol forming substrate.

The term "predicted parameter" may, for example, refer to one or more of: a time associated with each activation (e.g. a time at which each activation begins); a time at which or a range of times in which an empty battery event is predicted to occur; a time at which or a range of times in which a next activation event is predicted to occur; a time at which or a range of times in which an empty consumable event is predicted to occur; one or more parameters indicative of the performance of the device for a next activation event; one or more parameters indicative of a number of predicted activations of the smoking substitute device over a predetermined period of time; and the number of predicted activations of the smoking substitute device over a predetermined period of time.

The term "usage data" may, for example, refer to one or more of: a time associated with each activation (e.g. a time at which each activation begins); a duration associated with each activation (e.g. a length of time corresponding to how long the devices is activated for each activation); a location associated with each activation (e.g. a location corresponding to where the activation took place); a time associated with each charging event (e.g. a time at which each charging event begins); a duration associated with each charging event (e.g. a length of time corresponding to how long the device is charged for during each charging event); a location associated with each charging event (e.g. a location corresponding to where the charging event took place); a time associated with each consumable installation event (e.g. a time at which a new consumable was physically coupled to the main body); and a consumable level associated with each consumable installation event; a location associated with each consumable installation event (e.g. a location corresponding to where the consumable was physically coupled to the main body) The machine learning model is preferably configured based on usage data from a plurality of other devices, e.g. the usage data may be labelled to provide labelled training data, which may be used to train the model as described below.

For avoidance of any doubt, the machine learning model need not be created or trained on the smoking substitute device itself. Rather, the machine learning model may be created or trained on a separate (preferably more powerful) computer, e.g. a GPU workstation, e.g. based on labelled training data provided to that more powerful computer. By way of example, the labelled training data may include historical usage data relating to the usage of many smoking substitute devices, which has been labelled to allow the machine learning model to reveal insights about the dependence of usage data on certain parameters (e.g. the relative weighting of the contributions of input parameters on the resulting usage data). The labelled training data may include historical usage data relating to the usage of 1000 or more, 2000 or more, 5000 or more, or more preferably 7000 or more smoking substitute devices.

As used herein, the term "machine learning model" may refer to any algorithm or model which implements machine learning algorithms. As is known in the art, machine learning algorithms perform specific implicitly programmed tasks without using explicit instructions. Instead of using instructions, machine learning algorithms typically implement pattern recognition and inference to perform the programmed task. Machine learning algorithms typically construct mathematical models based on sample data, referred to herein as training data. The constructed mathematical models are typically configured to make predictions and/or decisions which accomplish the implicitly programmed task.

The machine learning model is preferably a deep learning machine learning model.

Using a deep learning model allows for the extrapolation from relatively simple raw data input to multifaceted higher level predictions about the future use and function of the smoking substitute device. Deep learning models form a well-known class of machine learning models which implement multiple layers of modelling to extract progressively higher level features from the input data. Deep learning models may be considered to be supervised, semi-supervised, or unsupervised.

The machine learning model may be a supervised learning model. As used herein, a "supervised learning model" may be considered to be a machine learning model wherein the model determines a function that maps one or more input parameters to one or more output parameters based on a quantity of labelled training data.

The machine learning machine model may be an unsupervised learning model. As used herein, an "unsupervised learning model" may be considered to be a machine learning model wherein the model finds and/or determines previously unknown patterns in a quantity of unlabelled training data, i.e. a dataset which has not been labelled.

The machine learning model may be a semi-supervised learning model. As used herein, the term "semi-supervised learning model" may be considered to be a machine learning model wherein the model determines one or more predicted parameters based on a quantity of labelled training data and a preferably larger quantity of unlabelled training data.

The smoking substitute device may include a wireless interface, wherein the smoking substitute device is configured to communicate wirelessly with an external device.

Additionally or alternatively, the smoking substitute device may include a wired interface (e.g. a USB port), wherein the smoking substitute device is configured to communicate with an external device via a wired connection which uses the wired interface.

The smoking substitute device may be configured to communicate the one or more predicted parameters or information derived from the one or more predicted parameters to the external device.

The external device may be a mobile device (e.g. a mobile phone), in which case the smoking substitute device may be configured to communicate wirelessly with an application (or "app") installed on the mobile device (e.g. via Bluetooth™, though of course other wireless protocols are possible).

The mobile device may be under control of the user of the mobile device.

The external device may be a remote server, in which case the smoking substitute device may be configured to communicate with the remote server via a suitable wireless protocol, e.g. via a low power wide area network (LWPAN) such as the Narrowband Internet of Things (NB-loT), though of course other wireless protocols are possible.

Advantageously, the external server could use the one or more predicted parameters or information derived from the one or more predicted parameters to categorise, classify, or assign a value (e.g. a predicted customer lifetime value or "PCLV") to the user of the smoking substitute device, without usage data or without sensitive portion of the usage data having been sent to the external server (which may be beneficial from a privacy perspective). For example, it is possible to send only aggregate (processed) data to the external server, e.g. which may be used by the external server to calculate a predicted customer lifetime value or "PCLV" for the purpose of sales and product capability insight.

The information derived from the one or more predicted parameters could be an order for a new consumable, e.g. if the one or more predicted parameters indicate that an empty consumable event is due to happen soon, and/or if it is predicted that there is likely to be a shortage of replacement consumables at a customer location.

The information could be a prompt to the user to perform a certain action, e.g. charge the smoking substitute device, replace the consumable, or activate the device.

The information could be an alert to the user that an event is predicted to happen in the near future, e.g. an empty battery event, an empty consumable event, or a predicted activation event.

The smoking substitute device may be configured to communicate the one or more predicted parameters or information derived from the one or more predicted parameters to the external device, without communicating the usage data (relating to usage of the smoking substitute device by the user), or sensitive portions of the usage data (e.g. concerning locations at which the device has been used), on which the one or more predicted parameters are based.

This may help reduce the amount of data communicated to the external device, and thus help reduce battery consumption by the smoking substitute device, since in general, the usage data will be more voluminous than predictions made based on the usage data.

Sensitive portions of the usage data may be understood as portions of the usage data which are not allowed to be transferred from the device, e.g. in accordance with privacy settings applicable to the device. Such privacy settings may, for example, be set by a user of the device, or may be set by a manufacturer of the device, e.g. with a view to protecting the privacy of a user of the device. Communicating the one or more predicted parameters without sending sensitive portions of the usage data to the external device may allow the external device to receive predicted parameters which are derived from the sensitive portions of the usage data, without transferring the sensitive portions of the usage data from the device.

The usage data (relating to usage of the smoking substitute device by the user) on which the one or more predicted parameters are based preferably include, for a plurality of activations ("puffs") of the device:
a time associated with each activation (e.g. a time at which each activation begins); and/or
a duration associated each activation (e.g. a length of time corresponding to how long the device is activated for each activation).

In this way, the model (suitably trained - see above) will be able to make predictions, based on the usage data, about future times at which the device will be activated, and for how long the device will be activated for on each occasion.

The plurality of activations of the device preferably include all activations of the device over a period of time, e.g. all activations since the user registered their device, all activations since the user last clearer the memory of the device, or all activations since the user installed the current consumable into their device.

The usage data (relating to usage of the smoking substitute device by the user) on which the one or more predicted parameters are based may include, for the plurality of activations ("puffs") of the device:
a location associated with each activation (e.g. a location corresponding to where the activation took place).

A location associated with an activation could be obtained by the smoking substitute device, for example, using a GPS unit included in the smoking substitute device, or using a GPS unit included in a mobile device wirelessly connected to the smoking substitute device (e.g. with location data being communicated to the smoking substitute device via a short range communication protocol such as Bluetooth™).

In this way, the model (suitably trained - see above) will be able to make predictions, based on the usage data, about when and where the device will be activated next. Additionally or alternatively, the model (suitably trained - see above) will be able to group behavioural patterns of users, including the times, durations and/or locations associated with one or more of activation events, empty battery events, empty consumable events, and charging events.

The usage data (relating to usage of the smoking substitute device by the user) on which the one or more predicted parameters are based may include, for a plurality of charging events of the device:
a time associated with each charging event (e.g. a time at which each charging event begins); and/or
a duration associated each charging event (e.g. a length of time corresponding to how long the device is charged for during each charging event);
optionally, a location associated with each charging event (e.g. a location corresponding to where the charging event took place).

In this way, the model (suitably trained - see above) will be able to make predictions, based on the usage data, about when and where the device will be charged next, for how long the device will be charged for on each occasion, and optionally (if location information is included in the usage data) where the device might next be charged.

A location associated with a charging event could be obtained by the smoking substitute device, for example, using a GPS unit included in the smoking substitute device, or using a GPS unit included in a mobile device wirelessly connected to the smoking substitute device (e.g. with location data being communicated to the smoking substitute device via a short range communication protocol such as Bluetooth™).

If the smoking substitute device has a main body configured to be physically coupled to a consumable, the usage data (relating to usage of the smoking substitute device by the user) on which the one or more predicted parameters are based may include, for a plurality of consumable installation events of the device:
a time associated with each consumable installation event (e.g. a time at which a new consumable was physically coupled to the main body);
optionally, a consumable level associated with each consumable installation event (this is optional since e.g. a consumable could be assumed to be full at the time it is physically coupled to the main body);
optionally, a location associated with each consumable installation event (e.g. a location corresponding to where the consumable was physically coupled to the main body).

In this way, the model (suitably trained - see above) will be able to make predictions, based on the usage data, about when (optionally where) a new consumable may be installed in the device.

A consumable level associated with a consumable can be understood as a level representative of how much consumable material is contained in the consumable.

A consumable level associated with a consumable event can be understood as a consumable level associated with a consumable at the time that consumable is physically coupled to the main body of the smoking substitute device.

In some cases, a consumable may include a device for determining a current consumable level associated with the consumable (an example of such a device is disclosed, for example, in US20170181223A). In this case, a consumable level associated with a consumable installation event could be obtained by the device for determining a current consumable level, and then communicated to the main body of the smoking substitute device by an appropriate communication means (e.g. via an electrical connection).

Alternatively, a consumable level associated with a consumable installation event could be obtained by the smoking substitute device, for example, by a user entering information concerning the consumable level associated with a consumable when that consumable is installed in the smoking substitute device (e.g. on a mobile device wirelessly connected to the smoking substitute device).

A location associated with a consumable installation event could be obtained by the smoking substitute device, for example, using a GPS unit included in the smoking substitute device, or using a GPS unit included in a mobile device wirelessly connected to the smoking substitute device (e.g. with location data being communicated to the smoking substitute device via a short range communication protocol such as Bluetooth™).

The machine learning model is preferably configured to receive contextual data (in addition to the usage data), and based on the usage data and contextual data, to determine the one or more predicted parameters relating to future usage of the smoking substitute device by the user.

The contextual data may include:
information indicative of an age of the user (e.g. date of birth information).

In this way, the model can make predictions which take account of the age of the user (e.g. in view of historical usage data used to train the machine learning model, since users may use their device differently depending on their age).

The contextual data may include:
a usage constraint which places a restriction on how the smoking substitute device is used.

In this way, the model can make predictions which take account of the usage constraint (e.g. in view of historical usage data used to train the machine learning model, since users may use their device differently depending on whether and what usage constraint is in place).

A usage constraint may for example set a maximum amount of nicotine that can be delivered by the device within a specified period (e.g. 5 mg per day).

The usage constraint may be set by a user, e.g. via a mobile phone wirelessly connected to the smoking substitute device.

The usage constraint may be set by a manufacturer of the device, e.g. to comply with legal requirements concerning usage of the device.

The contextual data may include:
a current battery level of the smoking substitute device.

In this way, the model can make predictions which take account of the current battery level of the device (e.g. in view of historical usage data used to train the machine learning model, since users may use their device differently depending on a current battery level).

The contextual data may include:
a current location of the smoking substitute device.

In this way, the model can make predictions which take account of the current location of the device (e.g. in view of historical usage data used to train the machine learning model, since users may use their device differently depending on a current location).

A current location of the smoking substitute device could be obtained by the smoking substitute device, for example, using a GPS unit included in the smoking substitute device, or using a GPS unit included in a mobile device wirelessly connected to the smoking substitute device (e.g. with location data being communicated to the smoking substitute device via a short range communication protocol such as Bluetooth™).

The contextual data may include:
a current consumable level of a consumable physically coupled to a main body of the smoking substitute device.

In this way, the model can make predictions which take account of the current level of consumable material in a consumable physically coupled to a main body of the smoking substitute device.

The contextual data may include:
a predetermined set of optimal performance parameters.

In this way, the model can make predictions which take account of the predicted performance of the device relative to a predetermined set of parameters which are deemed to optimise the performance of the device.

The one or more predicted parameters (relating to future usage of the smoking substitute device by the user) may include:
a time at which or a range of times in which an empty battery event is predicted to occur.

An empty battery event may be understood as an event in which charge in a battery of the smoking substitute device decreases to a level at which the smoking substitute device cannot be activated (e.g. because there is not enough charge for an activation to take place, or the charge in the battery of the smoking substitute device is such that a control unit of the smoking substitute device will prevent an activation from taking place to avoid damage to the battery).

For avoidance of any doubt, the time or range of times in which the empty battery event is predicted to occur may be expressed in the form of an absolute time (e.g. Wednesday 16 October 2019 at 14.00), as a relative time (e.g. 48 hours 52 minutes from now), or as a range of times (expressed in absolute or relative forms, e.g. 42 hours - 46 hours from now).

For predicting an empty battery event, the usage data may include:
a time associated with each activation;
a duration associated with each activation.

For predicting an empty battery event, the contextual data may include:
a current battery level of the smoking substitute device.

By using a machine learning model that predicts an empty battery event based on such usage data, and optionally based on such contextual data, an empty battery event can more accurately be predicted than via a simpler model that either does not use machine learning or is based on fewer items of information.

The one or more predicted parameters (relating to future usage of the smoking substitute device by the user) may include:
a time at which or a range of times in which a next activation event is predicted to occur

A next activation event may be understood as an event in which the smoking substitute device is next activated by the user of the device.

For predicting a next activation event, the usage data may include:
a time associated with each activation;
a duration associated each activation;
optionally, a location associated with each activation (e.g. a location corresponding to where the activation took place);
optionally, a time associated with each consumable installation event.

For predicting a next activation event, the contextual data may include:
optionally, information indicative of an age of the user;
optionally, a usage constraint which places a restriction on how the smoking substitute device is used;
optionally, a current battery level of the smoking substitute device;
optionally, a current location of the smoking substitute device.

By using a machine learning model that predicts a next activation event based on such usage data, and optionally based on such contextual data, a next activation event can more accurately be predicted than via a simpler model that either does not use machine learning or is based on fewer items of information.

The one or more predicted parameters (relating to future usage of the smoking substitute device by the user) may include:
a time at which or a range of times in which an empty consumable event is predicted to occur.

An empty consumable event may be understood as an event in which consumable material in a consumable physically coupled to a main body of the smoking substitute device decreases to a level at which the smoking substitute device will not function properly (e.g. because there is not enough consumable material for an activation to take place, or the amount of consumable material in the consumable is such that an activation will result in improper delivery of vapour).

For predicting an empty consumable event, the usage data may include:
a time associated with each activation;
a duration associated with each activation.

For predicting an empty consumable event, the contextual data may include:
optionally a time associated with a most recent consumable installation event;
optionally, a current consumable level of a consumable physically coupled to a main body of the smoking substitute device;
optionally, information indicative of an age of the user;
optionally, a usage constraint which places a restriction on how the smoking substitute device is used;
optionally, a current battery level of the smoking substitute device;
optionally, a current location of the smoking substitute device.

By using a machine learning model that predicts an empty consumable event based on such usage data, and optionally based on such contextual data, an empty consumable event can more accurately be predicted than via a simpler model that either does not use machine learning or is based on fewer items of information.

The one or more predicted parameters (relating to future usage of the smoking substitute device by the user) may include:
one or more parameters indicative of the performance of the device for a next activation event.

For predicting the one or more parameters indicative of the performance of the device for a next activation event, the usage data may include:
a time associated with each activations;
a duration associated with each activation;
optionally, a location associated with each activation (E.g. a location corresponding to where the activation took place;
a time associated with each consumable installation event.

For predicting the one or more parameters indicative of the performance of the device for a next activation event, the contextual data may include:
a current battery level of the smoking substitute device;
optionally, information indicative of an age of the user;
optionally, a usage constraint which places a restriction on how the smoking substitute deice is used;
optionally, a current location of the smoking substitute device.

By using a machine learning model that predicts the one or more parameters indicative of the performance of the device for a next activation event, the performance of the device for a next activation event can more accurately be predicted than via a simpler model that either does not use machine learning or is based on fewer items of information.

The one or more predicted parameters (relating to future usage of the smoking substitute device by the user) may include:
one or more parameters indicative of a number of predicted activations of the smoking substitute device over a predetermined period of time.

For predicting the one or more parameters indicative of a number of predicted activations of the smoking substitute device over the predetermined period of time, the usage data may include:
a time associated with each activation;
a duration associated with each activation;
optionally, a location associated with each activation (e.g. a location corresponding to where the activation took place);
optionally, a time associated with each consumable installation event.

For predicting the one or more parameters indicative of a number of predicted activations of the smoking substitute device over the predetermined period of time, the contextual data may include:
optionally, information indicative of an age of the user;
optionally, a usage constraint which places a restriction on how the smoking substitute device is used;
optionally, a current battery level of the smoking substitute device;
optionally, a current location of the smoking substitute device.

By using a machine learning model that predicts the one or more parameters indicative of a number of predicted activations of the smoking substitute device over a predetermined period of time based on such usage data, and optionally based on such contextual data, the number of activations can more accurately be predicted than via a simpler model that either does not use machine learning or is based on fewer items of information.

The one or more predicted parameters (relating to future usage of the smoking substitute device by the user) may include:
the number of predicted activations of the smoking substitute device over a predetermined period of time.

For predicting the number of predicted activations of the smoking device over the predetermined period of time, the usage data may include:
a time associated with each activation;
a duration associated with each activation;
optionally, a location associated with each activation (e.g. a location corresponding to where the activation took place);
optionally, a time associated with each consumable installation event.

For predicting the number of predicted activations of the smoking substitute device over a predetermined period of time, the contextual data may include:
one or more predicted parameters indicative of a number of predicted activations of the smoking substitute device over a predetermined period of time;
optionally, information indicative of an age of the user;
optionally, a usage constraint which places a restriction on how the smoking substitute device is used;
optionally, a current battery level of the smoking substitute device;
optionally, a current location of the smoking substitute device.

The smoking substitute device may be configured to change at least one configuration setting of the smoking substitute device, based on the one or more predicted parameters.

The smoking substitute device may be configured to change at least one configuration setting of the smoking substitute device, based on the one or more predicted parameters, subject to input from a user of the smoking substitute device.

By way of example, the smoking substitute device may be configured to change at least one configuration setting of the smoking substitute device, based on the one or more predicted parameters, subject to input from a user of the smoking substitute device by:
suggesting one or more changes to at least one configuration setting of the smoking substitute device, based on the one or more predicted parameters, to the user of the smoking substitute device (e.g. via a feedback device included in the smoking substitute device or via a user interface of an app installed on a mobile device wirelessly connected to the smoking substitute device);
if the user gives permission for a suggested change to be made, implementing the suggested change.

The feedback device included in the smoking substitute device could be an accelerometer or touch screen included in the smoking substitute device, for example. Additionally or alternatively, the feedback device may one or more of: a haptic feedback system, an organic light-emitting diode (OLED), a liquid crystal display (LCD), an audio feedback system, and a touch screen.

Alternatively, the change could be made automatically, i.e. without input from the user.

By way of example, if the one or more predicted parameters includes a time at which or a range of times in which an empty battery event is predicted to occur, the smoking substitute device may be configured to:
change at least one configuration setting of the smoking substitute device so as to reduce power consumption of the smoking substitute device, based on the predicted time or range of times.

For example, the smoking substitute device may be configured to change at least one configuration setting of the smoking substitute device so as to reduce power consumption of the smoking substitute device, if the predicted time or range of times is no more than a threshold amount of time away. This threshold amount of time may be 6 hours or more, e.g. 8 hours, 12 hours or 24 hours.

In this way, the battery life of the smoking substitute device can be extended beyond the predicted time or range of times.

Naturally, the smoking substitute device may be configured to revise the time at which or the range of times in which an empty battery event is predicted to occur, based on a change of at least one configuration setting by the smoking substitute device.

In some examples, the smoking substitute device may be configured to change at least one configuration setting of the smoking substitute device so as to reduce power consumption of the smoking substitute device, if the predicted time or range of times is no more than a threshold amount of time away and a current location of the smoking substitute device corresponds to a location at which the smoking substitute device has not previously been charged (since this is indicative of the user not having access to a charging device at that location, thereby indicating that a reduction in power consumption may be more useful).

An example of a change to a configuration setting so as to reduce power consumption of the smoking substitute device may include:
decreasing the power consumption (per unit time) of a heating device of the smoking substitute device, when activated;
turning off one or more non-essential components of the smoking substitute device (e.g. turning off one or more lights of the smoking substitute device, turning off an audio interface of the smoking substitute device, turning off a display of the smoking substitute device, turning off a haptic interface of the smoking substitute device).

For avoidance of any doubt, the smoking substitute device may be configured to change the at least one configuration setting of the smoking substitute device so as to reduce power consumption of the smoking substitute device, subject to input from a user of the smoking substitute device, e.g. as described above.

For example, the user may be required to give or deny permission for a suggested configuration change to be made (e.g. via a feedback device included in the smoking substitute device or via a user interface of an app installed on a mobile device wirelessly connected to the smoking substitute device), with that suggested change being implemented if the user gives permission.

For example, a plurality of suggested configuration changes could be presented to the user so as to reduce power consumption of the smoking substitute device (for example, the user could be asked to select one or more non-essential components to turn off), and if the user gives permission for one or more of those suggested configuration changes to be made, those suggested one or more changes could be implemented.

By way of another example, if the one or more predicted parameters include a time at which or a range of times in which a next activation event is predicted to occur, the smoking substitute device may be configured to:
change at least one configuration setting of the smoking substitute devices so as to ensure the smoking substitute device is ready for the next activation event.

By way of another example, if the one or more predicted parameters include one or more parameters indicative of a number of predicted activations of the smoking substitute device over a predetermined period of time, the smoking substitute device may be configured to:
change at least one configuration setting of the smoking substitute device so as to change the amount of nicotine delivered per activation of the smoking substitute device, based on a comparison of the number of actual activations of the smoking substitute device and the one or more parameters indicative of a number of predicted activations of the smoking substitute device over the predetermined period of time.

For example, if the number of actual activations is higher than the one or more parameters indicative of a number of predicted activations over the predetermined period of time, the smoking substitute device may be configured to change at least one configuration setting of the smoking substitute device so as to increase the amount of nicotine delivered per activation of the smoking substitute device (e.g. by increasing the power consumption of a heating device of the smoking substitute device, when activated), since this may help to reduce battery consumption, whilst ensuring the user gets the amount of nicotine they are seeking.

Alternatively, if the number of actual activations is higher than the one or more parameters indicative of a number of predicted activations over the predetermined period of time, the smoking substitute device may be configured to change at least one configuration setting of the smoking substitute device so as to decrease the amount of nicotine delivered per activation of the smoking substitute device (e.g. by decreasing the power consumption (per unit time) of a heating device of the smoking substitute device, when activated), since this may help to reduce overall nicotine consumption.

The smoking substitute device may include at least one feedback device, wherein the smoking substitute device is configured to use the at least one feedback device to provide feedback to the user based on the one or more predicted parameters.

The at least one feedback device may include a display, in which case the smoking substitute device may be configured to provide visual feedback to the user based on the one or more predicted parameters, e.g. by displaying a notification to provide a user with information based on the one or more predicted parameters or to prompt a user to take some action based on the one or more predicted parameters.

The at least one feedback device may include an audio interface, in which case the smoking substitute device may be configured to provide audible feedback to the user based on the one or more predicted parameters, e.g. by producing sound which provides a user with information based on the one or more predicted parameters or which prompts a user to take some action based on the one or more predicted parameters.

The at least one feedback device may include a haptic interface, in which case the smoking substitute device may be configured to provide haptic feedback to the user based on the one or more predicted parameters, e.g. by producing vibrations which provides a user with information based on the one or more predicted parameters or which prompts a user to take some action based on the one or more predicted parameters.

If the one or more predicted parameters include a time at which or a range of times in which an empty battery event is predicted to occur, the smoking substitute device may be configured to use the at least one feedback device to:
provide the user with information informing the user of the predicted time or range of times (e.g. visually via a display or the device, or audibly via an audio interface of the device, e.g. "At normal usage, your device is expected to run out of battery at 3pm today").

In this way, the user can be made aware of when their battery is likely to run out of battery, and act accordingly.

If the one or more predicted parameters includes a time at which or a range of times in which an empty battery event is predicted to occur, the smoking substitute device may be configured to use the at least one feedback device to:
prompt a user to charge their device, based on the predicted time or range of times.

For example, the smoking substitute device may be configured to use the at least one feedback device to prompt a user to charge their device, if the predicted time or range of times is no more than a threshold amount of time away. This threshold amount of time may be 6 hours or more, e.g. 8 hours, 12 hours or 24 hours).

In this way, the user can be informed of a need to charge their device, and act accordingly.

If the one or more predicted parameters include a time at which or a range of times in which an empty battery event is predicted to occur, the smoking substitute device may be configured to use the at least one feedback device to:
suggest one or more changes to the configuration settings of the smoking substitute device to reduce the power consumption of the device;
implement any of the one or more suggested changes to the configuration settings of the smoking substitute device that are selected by the user (in response to the suggested change(s)).

In this way, the user can select one or more appropriate changes to the configuration settings of the smoking substitute device to prolong the battery life of the device.

In some examples, the smoking substitute device may be configured to use the at least one feedback device to prompt a user to charge their device, if the predicted time or range of times is no more than a threshold amount of time away and a current location of the smoking substitute device corresponds to a location at which the smoking substitute device has previously been charged (since this is indicative of the user having access to a charging device at that location, thereby rendering the prompt more useful).

If the one or more predicted parameters include a time at which or a range of times in which, a next activation event is predicted to occur, the smoking substitute device may be configured to use the at least one feedback device to:
if the device is not used by that time or by the end of the range of times, prompt the user to use their smoking substitute device (e.g. "fancy a puff?").

In this way, the user can ensure they get their usual dose of nicotine at the expected time.

If the one or more predicted parameters include a time at which or a range of times in which, a next activation event is predicted to occur, the smoking substitute device may be configured to use the at least one feedback device to:
suggest one or more changes to the configuration settings of the smoking substitute device to ensure that the smoking substitute device is ready for immediate activation at the time or range of times of the next activation event;
implement one or more of the one or more suggested changes to the configuration settings of the smoking substitute device that are permitted by the user.

In this way, the user can select one or more appropriate changes to the configuration settings of the smoking substitute device to ensure that the device is ready for an activation event, with no delay, when the user wants to activate the device

If the one or more predicted parameters include a time at which or a range of times in which an empty consumable event is predicted to occur, the smoking substitute device may be configured to use the at least one feedback device to:
provide feedback to the user to inform the user of the predicted time or range of times (e.g. visually via a display or the device, or audibly via an audio interface of the device).

If the one or more predicted parameters includes a time at which or a range of times in which an empty consumable event is predicted to occur, the smoking substitute device may be configured to use the at least one feedback device to:
prompt a user to obtain/maintain access to a spare consumable, based on the predicted time or range of times.

For example, the smoking substitute device may be configured to use the at least one feedback device to prompt the user to buy a new consumable or bring one with them, if the predicted time or range of times is no more than a threshold amount of time away. This threshold amount of time may be 4 hours or more, e.g. 8 hours, 12 hours or 24 hours).

In some examples, the smoking substitute device may be configured to use the at least one feedback device to prompt a user to obtain/maintain access to a spare consumable, if the predicted time or range of times is no more than a threshold amount of time away and a current location of the smoking substitute device corresponds to a location at which a consumable installation event involving the smoking substitute device has previously taken place (since this is indicative of the user having access to a spare consumable at that location, thereby rendering the prompt more useful).

If the one or more predicted parameters includes a time at which or a range of times in which an empty consumable event is predicted to occur, the smoking substitute device may be configured to:
suggest one or more changes to the configuration settings of the smoking substitute device to reduce the consumable consumption of the device;
implement one or more of the one or more suggested changes to the configuration settings of the smoking substitute device that are permitted by the user.

In this way, the user can select one or more appropriate changes to the configuration settings of the smoking substitute device to prolong the lifetime of the consumable of the smoking substitute device.

If the one or more predicted parameters includes a time at which or a range of times in which an empty consumable event is predicted to occur, the smoking substitute device may be configured to:
order a new consumable for use with the smoking substitute device.

In this way, the user of the smoking substitute device is less likely to suffer from an interruption in the regularity of activation events of the smoking substitute device as a replacement consumable will be purchased and available prior to the present consumable of the smoking substitute device running out of consumable material.

If the one or more predicted parameters include one or more parameters indicative of the performance of the device for a next activation event, the smoking substitute device may be configured to:
compare the one or more parameters indicative of the performance of the device for a next activation event with one or more predetermined parameters indicative of an optimal performance of the smoking substitute device for a next activation event;
if the one or more parameters indicative of the performance of the device for a next activation event do not match the corresponding one or more predetermined parameters indicative of an optimal performance of the smoking substitute device for a next activation event:
   adjust one or more of the configuration settings of the smoking substitute device to adjust the one or more parameters indicative of the performance of the device for a next activation event;
   repeat the comparison of the one or more parameters indicative of the performance of the device for a next activation event with one or more predetermined parameters indicative of an optimal performance of the smoking substitute device for a next activation event and corresponding adjustment of the one or more parameters indicative of the performance of the smoking substitute device for a next activation event until the one or more parameters indicative of the performance of the device for a next activation event match the corresponding one or more predetermined parameters indicative of an optimal performance of the smoking substitute device for a next activation event;
if the one or more parameters indicative of the performance of the device for a next activation event do match the corresponding one or more predetermined parameters indicative of an optimal performance of the smoking substitute device for a next activation event:
   use the at least one feedback device to provide feedback to the user to inform the user that the smoking substitute device is ready for the next activation event.

In this way, the consistent high quality of activation events of the smoking substitute device for the user can be assured.

If the one or more predicted parameters include one or more parameters indicative of a number of predicted activations of the smoking substitute device over a predetermined period of time, the smoking substitute device may be configured to use the at least one feedback device to:
if the number of actual activations is higher than the one or more parameters indicative of a number of predicted activations over the predetermined period of time, provide an indication to the user that their usage is higher than expected.

In this way, the user can be apprised of their usage of the smoking substitute device, allowing them to make informed decisions about their future usage

If the one or more predicted parameters include the number of predicted activations of the smoking substitute device over a predetermined period of time, the smoking substitute device may be configured to:
if the rate of actual activations is indicative of a higher number of actual activations over the predetermined period of time than the number of predicted activations over the predetermined period of time, reduce the amount of nicotine delivered per activation event of the smoking substitute device;
if the rate of actual activations is indicative of a lower number of actual activations over the predetermined period of time than the number of predicted activations over the predetermined period of time, increase the amount of nicotine delivered per activation event of the smoking substitute device;
if the rate of actual activations is indicative of the same number of actual activations over the predetermined period of time as the number of predicted activations over the predetermined period of time, maintain the amount of nicotine delivered per activation event of the smoking substitute device.

In this way, it can be ensured that the amount of nicotine delivered to the user over the course of the predetermined period of time is consistent. This allows the user to be confident that they are aware of the amount of nicotine they are consuming over the course of the predetermined time period.

A second aspect of the invention may provide: A method of operating a smoking substitute device, the smoking substitute device comprising at least one processor configured to run a machine learning model, wherein the method comprises:
the machine learning model receiving usage data relating to usage of the smoking substitute device by a user, and based on that usage data, determining one or more predicted parameters relating to future usage of the smoking substitute device by the user

Preferably, the smoking substitute device is configured to generate an aerosol from an aerosol forming substrate.

The method may be performed by a smoking substitute device according to the first aspect of the invention.

The method may include any method step implementing or corresponding to any apparatus feature described in connection with the first aspect of the invention.

A third aspect of the invention may provide: A computer readable medium comprising a computer readable instructions configured to, when executed, cause a smoking substitute device to perform a method according to the second aspect of the invention.

A fourth aspect of the invention may provide: Electrical circuitry comprising:
at least one processor configured to run a machine learning model;
wherein the machine learning model is configured to receive usage data relating to usage of the smoking substitute device by a user, and based on that usage data, to determine one or more predicted parameters relating to future usage of the smoking substitute device by the user.

A fifth aspect of the invention may provide: A system including:
a smoking substitute device according to the first aspect of the invention;
an external device, wherein the smoking substitute device is configured to communicate wirelessly with an external device.

The smoking substitute device may have one or more of the features as described in connection with the first aspect of the invention. The external device may have one or more of the features as described in connection with the first aspect of the invention. For example, the external device may be a mobile device or an external server.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Figure 1** shows an example system for managing a smoking substitute device.
**Figure 2(a)** shows an example smoking substitute device for use as the smoking substitute device in the system of Fig. 1.
**Figure 2(b)** shows the main body of the smoking substitute device of Fig. 2(a) without the consumable.
**Figure 2(c)** shows the consumable of the smoking substitute device of Fig. 2(a) without the main body.
**Figure 3(a)** is a schematic view of the main body of the smoking substitute device of Fig. 2(a).
**Figure 3(b)** is a schematic view of the consumable of the smoking substitute device of Fig. 2(a).
**Figure 4(a)** is a flow diagram showing a method of implementing the machine learning algorithm in the machine learning unit of Fig. 3(a).
**Figure 4(b)** is a flow diagram showing a method of using the results of the machine learning algorithm in

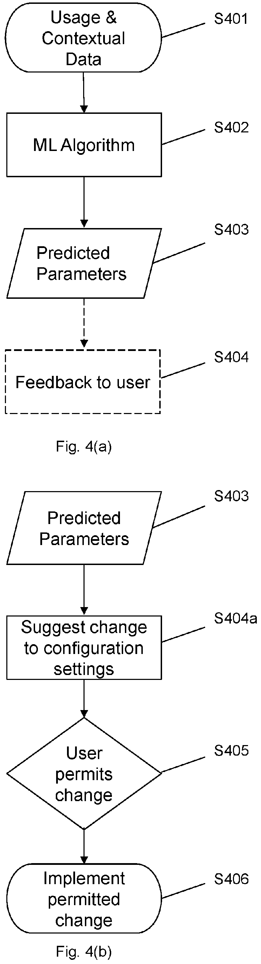

Fig. 4(b) to suggest a change of the configuration settings of the smoking substitute device to the user of the smoking substitute device.

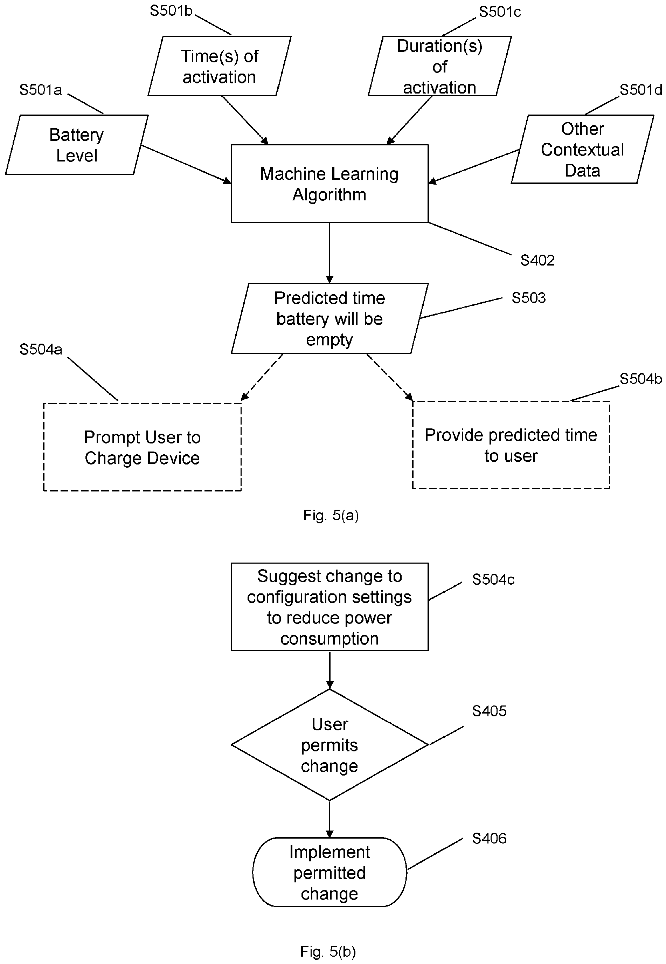

**Figure 5(a)** is a flow diagram showing a specific example of the method of Fig. 4(a) to predict the time that the battery of the main body of the smoking substitute device will run out of charge.
**Figure 5(b)** is a flow diagram showing a specific example of the method of Fig. 4(b) to reduce the power consumption of the smoking substitute device to prolong the battery life of the smoking substitute device.

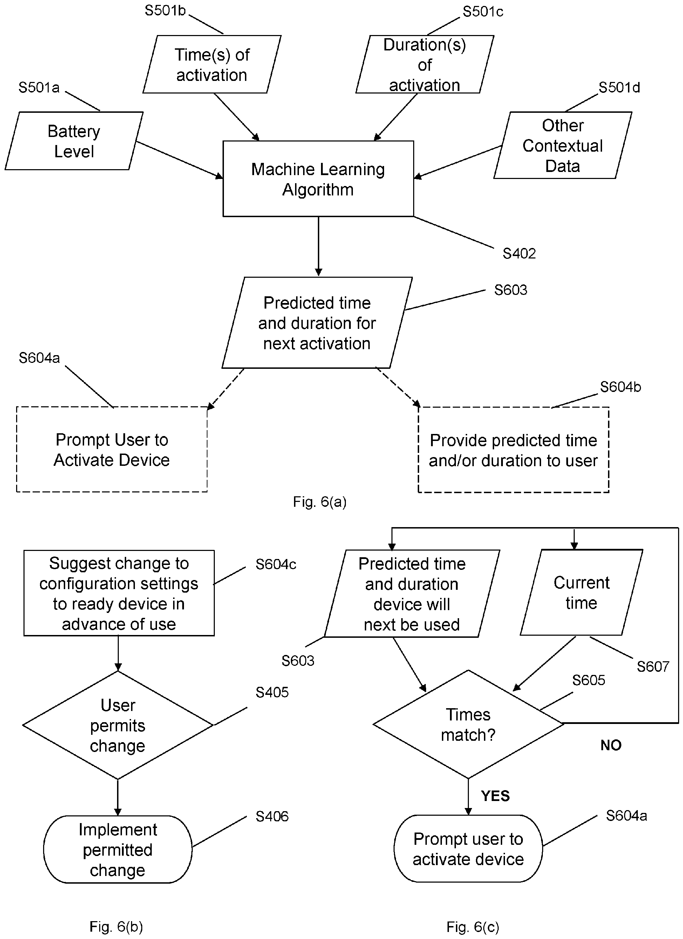

**Figure 6(a)** is a flow diagram showing a specific example of the method of Fig. 4(a) to predict the time that the smoking substitute device will next be used.
**Figure 6(b)** is a flow diagram showing a specific example of the method of Fig. 4(b) to ensure the smoking substitute device is ready for use in advance of the predicted time that the smoking substitute device will next be used.
**Figure 6(c)** is a flow diagram showing a specific example of the method of Fig. 6(a) to prompt the user to activate the smoking substitute device at the predicted time of the next activation event of the device.

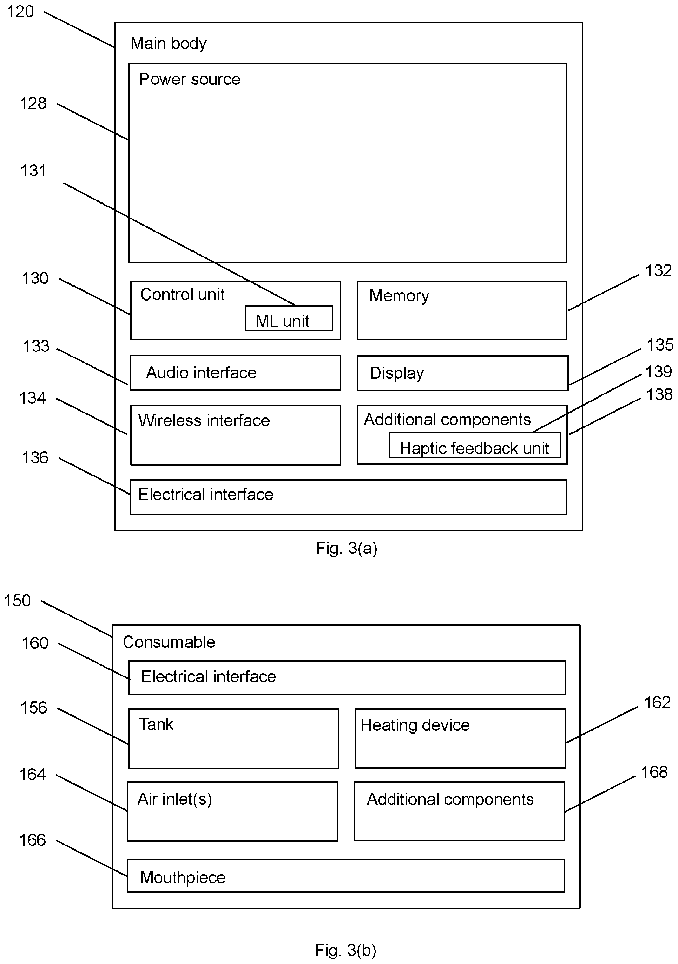

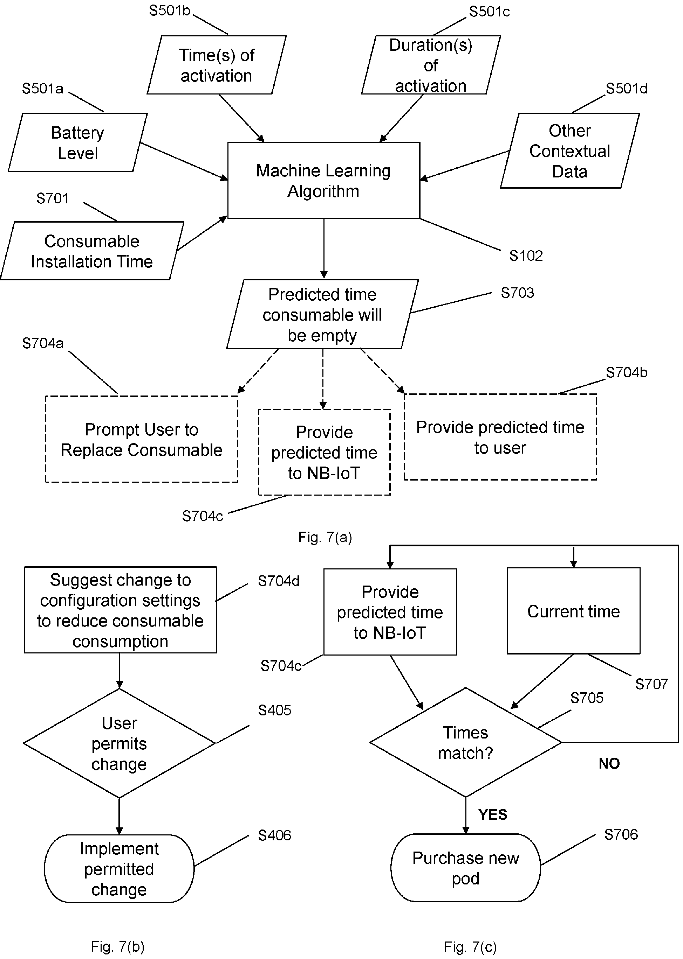

**Figure 7(a)** is a flow diagram showing a specific example of the method of Fig. 4(a) to predict the time that the consumable of Fig. 3(b) will become empty.
**Figure 7(b)** is a flow diagram showing a specific example of the method of Fig. 4(b) to reduce the consumption of the consumable of the smoking substitute device to prolong the lifetime of the consumable.
**Figure 7(c)** is a flow diagram showing a method using the results of the machine learning algorithm to determine when to purchase a new consumable for the smoking substitute device.

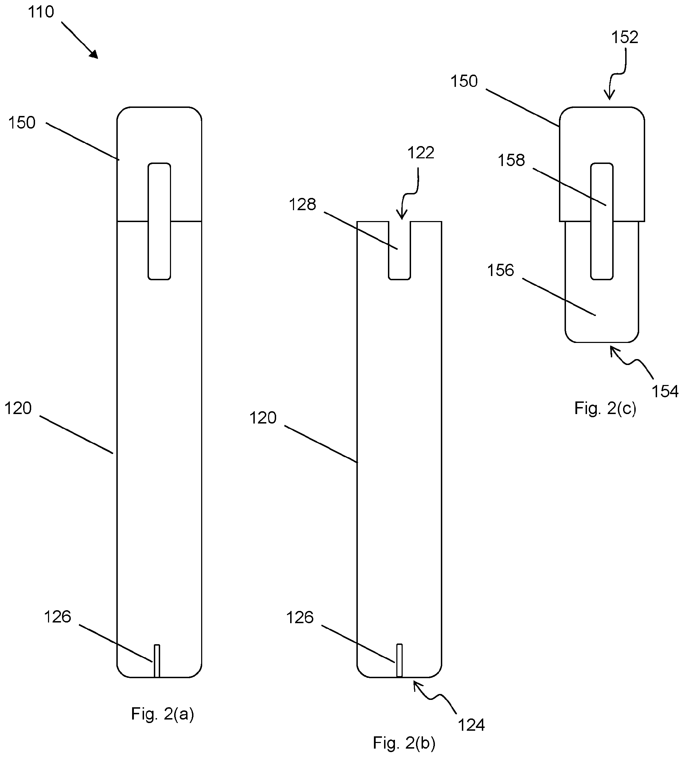

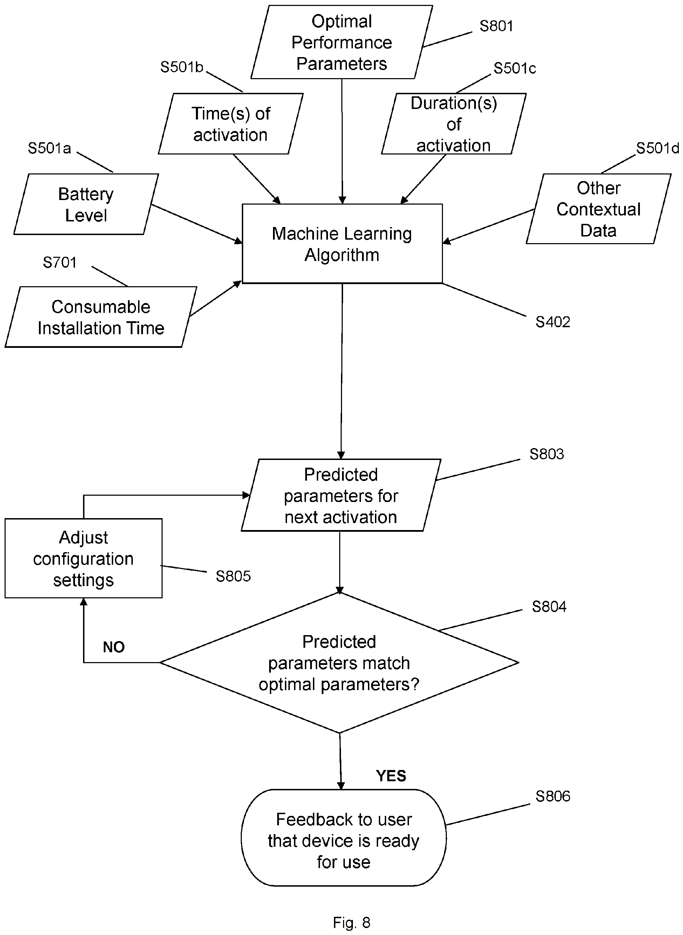

**Figure 8** is a flow diagram showing a method of implementing the machine learning algorithm in the machine learning unit of Fig. 3(a) and using the results to optimise the performance parameters of the smoking substitute device of Fig. 2(a).

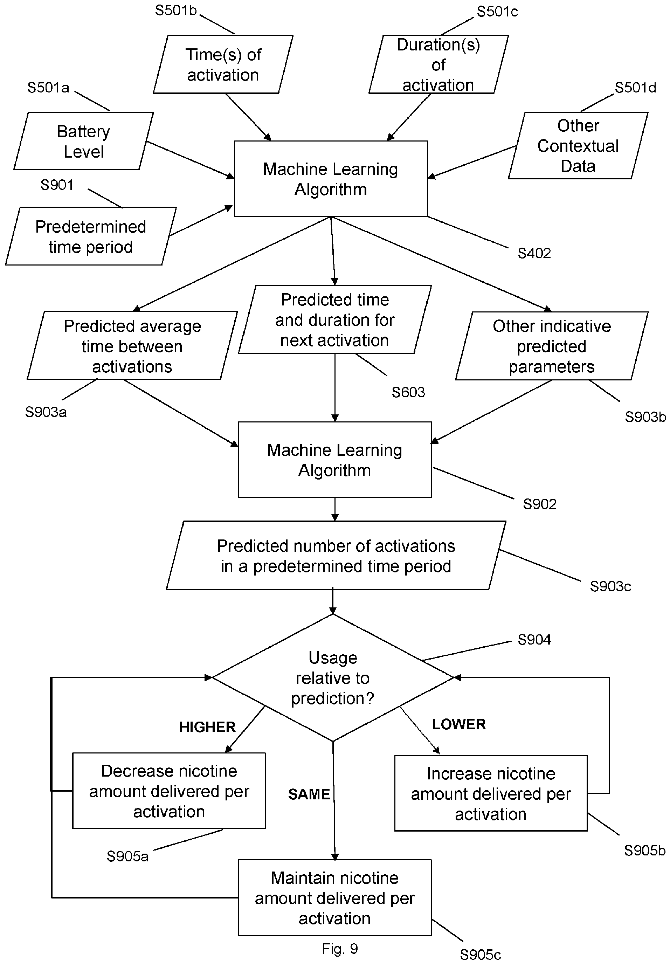

**Figure 9** is a flow diagram showing a method of implementing the machine learning algorithm in the machine learning unit of Fig. 3(a) to predict the number of activations of the smoking substitute device of Fig. 2(a) in a predetermined time period, and adjusting the amount of nicotine delivered per activation according to a comparison between the predicted number of activations and the actual usage of the device.

### Detailed Description of the Invention

A smoking substitute device as described herein may be configured to generate an aerosol from an aerosol forming substrate. The smoking substitute device may be configured to deliver the aerosol to a user for inhalation. For avoidance of any doubt, the smoking substitute device could be either a vaping smoking substitute device, or a heat not burn smoking substitute device (such devices are described in the background section, above). As used herein, the term "aerosol" may include a suspension of aerosol forming substrate, included as one or more of: solid particles; liquid droplets; gas. Said suspension may be in a gas including air. The aerosol may include one or more components of the aerosol forming substrate. As used herein, the term "aerosol forming substrate" (also "aerosol-forming precursor" or "precursor") may refer to one or more of a: liquid; solid; gel; other substance (for which an aerosol is generated). An aerosol generating unit of the smoking substitute device may be configured to process the aerosol forming substrate to form an aerosol as defined herein. The term "aerosol" herein may be used interchangeably with the term "vapour".

The present inventor(s) have observed that it would be beneficial for a smoking substitute device to offer a user predictions and/or prompts indicative of the future performance of the device based on historic performance of the device, without having to rely on communicating data with a cloud-based computer system, since use of a cloud-based computer system for this purpose may increases the security risks associated with personal data breaches and may not be viable in the near future as the available bandwidth associated with cloud-based computing falls. The present invention reduces the latency of data processing, which is associated with reduced bandwidth availability in cloud-based computing, thus ensuring a better Quality of Service (QoS)

Aspects and embodiments of the present invention will now be discussed with reference to the accompanying figures. Further aspects and embodiments will be apparent to those skilled in the art. All documents mentioned in this text are incorporated herein by reference.

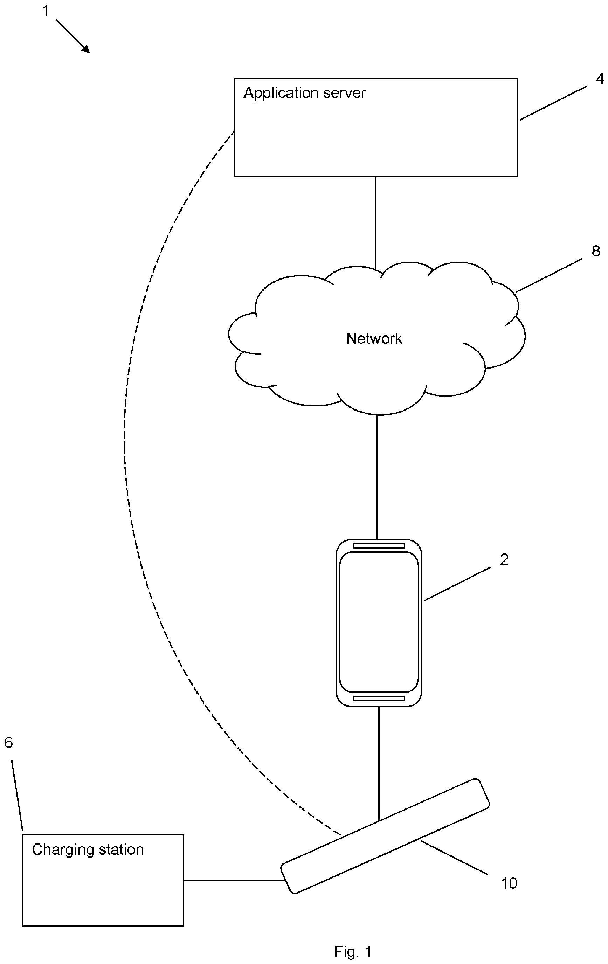

Fig. 1 shows an example system 1 for managing a smoking substitute device 10.

The system 1 as shown in Fig. 1 includes a mobile device 2, an application server 4, an optional charging station 6, as well as the smoking substitute device 10.

The smoking substitute device 10 is configured to communicate wirelessly, e.g. via Bluetooth™, with an application (or "app") installed on the mobile device 2, e.g. via a suitable wireless interface (not shown) on the mobile device 2. The mobile device 2 may be a mobile phone, for example. The application on the mobile phone is configured to communicate with the application server 4, via a network 8. The application server 4 may utilise cloud storage, for example.

The network 8 may include a cellular network and/or the internet.

In other examples, the smoking substitute device 10 may be configured to communicate with the application server 4 via a connection that does not involve the mobile device 2, e.g. via a narrowband internet of things ("NB-loT") connection. In some examples, the mobile device 2 may be omitted from the system. In other examples, the smoking substitute device 10 may be configured to communicate with the application server 4 via any cellular loT or LPWAN loT connection.

A skilled person would readily appreciate that the mobile device 2 may be configured to communicate via the network 8 according to various communication channels, preferably a wireless communication channel such as via a cellular network (e.g. according to a standard protocol, such as 3G or 4G) or via a WiFi network.

The app installed on the mobile device and the application server 4 may be configured to assist a user with their smoking substitute device 10, based on information communicated between the smoking substitute device 10 and the app and/or information communicated between the app and the application server 4.

The charging station 6 (if present) may be configured to charge (and optionally communicate with) the smoking substitute device 10, via a charging port on the smoking substitute device 10. The charging port on the smoking substitute device 10 may be a USB port, for example, which may allow the smoking substitute device to be charged by any USB-compatible device capable of delivering power to the smoking substitute device 10 via a suitable USB cable (in this case the USB-compatible device would be acting as the charging station 6). Alternatively, the charging station could be a docking station specifically configured to dock with the smoking substitute device 10 and charge the smoking substitute device 10 via the charging port on the smoking substitute device 10.

Fig. 2(a) shows an example smoking substitute device 110 for use as the smoking substitute device 10 in the system 1 of Fig. 1.

In this example, the smoking substitute device 110 includes a main body 120 and a consumable 150. The consumable 150 may alternatively be referred to as a "pod".

In this example, the smoking substitute device 110 is a closed system vaping device, wherein the consumable 150 includes a sealed tank 156 and is intended for one-use only.

Fig. 2(a) shows the smoking substitute device 110 with the main body 120 physically coupled to the consumable 150.

Fig. 2(b) shows the main body 120 of the smoking substitute device 110 without the consumable 150.

Fig. 2(c) shows the consumable 150 of the smoking substitute device 110 without the main body 120.

The main body 120 and the consumable 150 are configured to be physically coupled together, in this example by pushing the consumable 150 into an aperture in a top end 122 of the main body 120, e.g. with the consumable 150 being retained in the aperture via an interference fit. In other examples, the main body 120 and the consumable could be physically coupled together by screwing one onto the other, through a bayonet fitting, or through a snap engagement mechanism, for example. An optional light 126, e.g. an LED located behind a small translucent cover, is located a bottom end 124 of the main body 120. The light 126 may be configured to illuminate when the smoking substitute device 110 is activated.

The consumable 150 includes a mouthpiece (not shown) at a top end 152 of the consumable 150, as well as one or more air inlets (not shown in Fig. 2) so that air can be drawn into the smoking substitute device 110 when a user inhales through the mouthpiece. At a bottom end 154 of the consumable 150, there is located a tank 156 that contains e-liquid. The tank 156 may be a translucent body, for example.

The tank 156 preferably includes a window 158, so that the amount of e-liquid in the tank 156 can be visually assessed. The main body 120 includes a slot 128 so that the window 158 of the consumable 150 can be seen whilst the rest of the tank 156 is obscured from view when the consumable 150 is inserted into the aperture in the top end 122 of the main body 120.

In this present embodiment, the consumable 302 is a "single-use" consumable. That is, upon exhausting the e-liquid in the tank 156, the intention is that the user disposes of the whole consumable 150. In other embodiments, the e-liquid (i.e. aerosol former) may be the only part of the system that is truly "single-use". In such embodiments, the tank 156 may be refillable with e-liquid or the e-liquid may be stored in a non-consumable component of the system. For example, the e-liquid may be stored in a tank located in the device or stored in another component that is itself not single-use (e.g. a refillable tank).

The tank 156 may be referred to as a "clearomizer" if it includes a window 158, or a "cartomizer" if it does not.

Fig. 3(a) is a schematic view of the main body 120 of the smoking substitute device 110.

Fig. 3(b) is a schematic view of the consumable 150 of the smoking substitute device 110.

As shown in Fig. 3(a), the main body 120 includes a power source 128, a control unit 130, a memory 132, a wireless interface 134, an electrical interface 136, and, optionally, one or more additional components 138.

The main body 120 may include an audio interface 133 and/or a display 135.

The power source 128 is preferably a battery, more preferably a rechargeable battery.

The control unit 130 may include a microprocessor, for example.

The control unit 130 includes a machine learning unit 131. The machine learning unit comprises at least one processor configured to run a machine learning model.

The memory 132 is preferably includes non-volatile memory.

The wireless interface 134 is preferably configured to communicate wirelessly with the mobile device 2, e.g. via Bluetooth. To this end, the wireless interface 134 could include a Bluetooth™ antenna. Other wireless communication interfaces, e.g. WiFi, are also possible.

The electrical interface 136 of the main body 120 may include one or more electrical supply contacts. The electrical interface 136 may be located in, and preferably at the bottom of, the aperture in the top end 122 of the main body 120. When the main body 120 is physically coupled to the consumable 150, the electrical interface 136 may be configured to pass electrical power from the power source 128 to (e.g. a heating device of) the consumable 150 when the smoking substitute device 110 is activated, e.g. via the electrical interface 160 of the consumable 150 (discussed below). When the main body 120 is not physically coupled to the consumable 150, the electrical interface may be configured to receive power from the charging station 6.

The additional components 138 of the main body 120 may include the optional light 126 discussed above.

The additional components 138 of the main body 120 may include a haptic feedback unit 139.

The additional components 138 of the main body 120 may, if the power source 128 is a rechargeable battery, include a charging port configured to receive power from the charging station 6. This may be located at the bottom end 124 of the main body 120. Alternatively, the electrical interface 136 discussed above is configured to act as a charging port configured to receive power from the charging station 6 such that a separate charging port is not required.

The additional components 138 of the main body 120 may, if the power source 128 is a rechargeable battery, include a battery charging control circuit, for controlling the charging of the rechargeable battery. However, a battery charging control circuit could equally be located in the charging station 6 (if present).

The additional components 138 of the main body 120 may include an airflow sensor for detecting airflow in the smoking substitute device 110, e.g. caused by a user inhaling through a mouthpiece 166 (discussed below) of the smoking substitute device 110. The smoking substitute device 110 may be configured to be activated when airflow is detected by the airflow sensor. This optional sensor could alternatively be included in the consumable 150 (though this is less preferred where the consumable 150 is intended to be disposed of after use, as in this example).

The additional components 138 of the main body 120 may include an actuator, e.g. a button. The smoking substitute device 110 may be configured to be activated when the actuator is actuated. This provides an alternative to the airflow sensor noted, as a mechanism for activating the smoking substitute device 110.

The additional components 138 of the main body 120 may include a reading device configured to read information associated with the consumable from a machine readable data source included in (e.g. contained in the body of, or attached to) the consumable 150.

In some examples, the reading device (if present) may be configured to read information from the machine readable data source non-wirelessly, e.g. using an electrical connection between the main body 120 and consumable 150.

For example, the reading device (if present) may include a set of one or more electrical communication contacts configured to read information from the machine readable data source via an electrical connection established between the set of one or more electrical communication contacts and the machine readable data source. Conveniently, the set of one or more electrical communication contacts of the reading device may be configured to provide the electrical connection by engaging with a set of one or more electrical communication contacts of the consumable 150, when the main body 120 and the consumable 150 are physically coupled together.

In some examples, the reading device (if present) may be configured to read information from the machine readable data source wirelessly, e.g. via electromagnetic waves or optically. Thus, for example, the machine readable data source included in the consumable 150 could be an RFID tag (in which case the reading device included in the main body 120 may be an RFID reader) or a visual data source such as a barcode (in which case the reading device included in the main body may be an optical reader, e.g. a barcode scanner). Various wireless technologies and protocols may be employed to allow the reading device to wirelessly read information from a machine readable data source included in or attached to the consumable 150, e.g. NFC, Bluetooth, Wi-Fi, as would be appreciated by a skilled person.

The reading device (if present) may be configured to write information associated with the consumable to the machine readable data source (e.g. wirelessly or non-wirelessly, via one of the mechanisms discussed above) in addition to being configured to read information associated with the consumable from the machine readable data source. In this case, the reading device may be referred to as a reading/writing device.

As shown in Fig. 3(b), the consumable 150 includes the tank 156, an electrical interface 160, a heating device 162, one or more air inlets 164, a mouthpiece 166, and, optionally, one or more additional components 168.

The electrical interface 160 of the consumable 150 may include one or more electrical supply contacts. The electrical interface 136 of the main body 120 and an electrical interface 160 of the consumable 150 are preferably configured to contact each other and therefore electrically couple the main body 120 to the consumable 150 when the main body 120 is physically coupled to the consumable 150. In this way, electrical energy (e.g. in the form of an electrical current) is able to be supplied from the power source 128 in the main body 120 to the heating device 162 in the consumable 150.

The heating device 162 is preferably configured to heat e-liquid contained in the tank 156, e.g. using electrical energy supplied from the power source 128. In one example, the heating device 162 may include a heating filament and a wick, wherein a first portion of the wick extends into the tank 156 in order to draw e-liquid out from the tank 156, and wherein the heating filament coils around a second portion of the wick located outside the tank 156. In this example, the heating filament is configured to heat up e-liquid drawn out of the tank 156 by the wick to produce an aerosol vapour.

The one or more air inlets 164 are preferably configured to allow air to be drawn into the smoking substitute device 110, when a user inhales through the mouthpiece 166.

The additional components 168 of the consumable 150 may include a machine readable data source, which may e.g. be contained in the body of, or attached to the consumable 150. The machine readable data source may store information associated with the consumable. The information associated with the consumable may include information concerning the content of the consumable (e.g. e-liquid type, batch number) and/or a unique identifier, for example.

The machine readable data source may be rewritable, e.g. a rewritable RFID chip, or read only, e.g. a visual data source such as a barcode. As indicated above, the additional components 138 of the main body 120 may include a reading device configured to read information associated with the consumable from the machine readable data source.

For example, the electrical interface 160 of the consumable 150 may include a set of one or more electrical communication contacts, which may allow a reading device of the main body to read information from a machine readable data source of the consumable, e.g. as discussed previously.

In use, a user activates the smoking substitute device 110, e.g. through actuating an actuator included in the main body 120 or by inhaling through the mouthpiece 166 as described above. Upon activation, the control unit 130 may supply electrical energy from the power source 128 to the heating device 162 (via electrical interfaces 136, 166), which may cause the heating device 162 to heat e-liquid drawn from the tank 156 to produce a vapour which is inhaled by a user through the mouthpiece 166.

Of course, a skilled reader would readily appreciate that the smoking substitute device 110 shown in Figs. 2 and 3 shows just one example implementation of a smoking substitute device, and that other forms of smoking substitute device could be used as the smoking substitute device 10 of Fig. 1.

By way of example, a HNB smoking substitute device including a main body and a consumable could be used as the smoking substitute device 10 of Fig. 1, instead of the smoking substitute device 110. One such HNB smoking substitute device is the IQOS™ smoking substitute device discussed above.

As another example, an open system vaping device which includes a main body, a refillable tank, and a mouthpiece could be used as the smoking substitute device 10 of Fig. 1, instead of the smoking substitute device 110. One such open system vaping device is the blu PRO™ e-cigarette discussed above.

As another example, an entirely disposable (one use) smoking substitute device could be used as the smoking substitute device 10 of Fig. 1, instead of the smoking substitute device 110.

Figure 4(a) shows a method by which the machine learning unit 131 of the controller 130 of the main body 120 of the smoking substitute device 10 could implement a machine learning algorithm to predict the future functioning of the smoking substitute device based on historic usage and contextual data S401. Figures 5(a), 6(a), 7(a), 8, and 9 show example implementations of the machine learning algorithm for predicting example parameters.

In step S402 of the method displayed in Figure 4(a), usage and contextual data S401 (relating to usage of the smoking substitute device 10 by the user) is inputted into a machine learning algorithm which calculates a series of predicted parameters S403 to predict the future functioning of the smoking substitute device 10. Preferably the machine learning algorithm is implemented via a deep learning model. Optionally, the predicted parameters are outputted as feedback to the user of the smoking substitute device in step S404.

The usage and contextual data S401 preferably includes, for a plurality of activations of the smoking substitute device 10, one or more information types including: power level information S501a associated with the power level of the power source 128 of the main body 120 of the smoking substitute device 10, a time associated with each activation S501b (e.g. a time at which each activation begins), a duration associated with each activation S501c (e.g. a length of time corresponding to how long the device is activated for each activation), and other contextual data S501d.

The usage and contextual data S401 may further include usage data associated with a plurality of charging events of the device. Usage data associated with charging events of the device may include: a time associated with each charging event (e.g. a time at which each charging event begins), a duration associated with each charging event (e.g. a length of time corresponding to how long the device is charged for during each charging event), and/or a location associated with each charging event (e.g. a location corresponding to where the charging event took place.

The location associated with each charging event may be a coordinate determined by a GPS unit, or similar. The GPS unit, or similar, may be amongst the additional components 138 of the main body 120 of the smoking substitute device. Alternatively, the GPS unit, or similar, may be amongst the additional components 168 of the consumable 150 of the smoking substitute device 10. Alternatively, the GPS unit, or similar, may be a component of the remote device 2, wherein the location associated with each charging event is communicated to the smoking substitute device via a short range communication protocol such as Bluetooth™.

The usage and contextual data S401 may further include usage data associated with a plurality of consumable installation events of the device. Usage data associated with consumable installation events of the device may include: a time associated with each consumable installation event S701 (e.g. a time at which a new consumable 150 was physically coupled to the main body 120). Usage data associated with consumable installation events may optionally include: a consumable level associated with each consumable installation event and/or a location associated with each consumable installation event.

The consumable level associated with each consumable installation event may be a level indicative of how much consumable material is contained in the consumable 150, e.g. the mass and/or volume of consumable material contained in the consumable.

The consumable level associated with each consumable installation event may be obtained by the consumable 150 of the smoking substitute device 10 and communicated via the electrical interface 160 and the electrical interface 136 to the main body 120 of the smoking substitute device 10. Additionally or alternatively, the consumable level associated with each consumable installation event may be obtained by the main body 120 of the smoking substitute device 10 via input from the user of the device. For example, the user could input the consumable level associated with each consumable installation event via an application stored on the remote device 2, which is then communicated wirelessly to the smoking substitute device via the wireless network 8 and/or application server 4. Alternatively, the user could input the consumable level associated with each consumable installation event via voice recognition software installed in the audio interface 133 of the main body 120 of the device. Alternatively, the user could input the consumable level associated with each consumable installation event via a graphics user interface (GUI) installed on the display 135 of the main body 120 of the device.

The location associated with each consumable installation event may be a coordinate determined by a GPS unit, or similar. The GPS unit, or similar, may be amongst the additional components 138 of the main body 120 of the smoking substitute device. Alternatively, the GPS unit, or similar, may be amongst the additional components 168 of the consumable 150 of the smoking substitute device 10. Alternatively, the GPS unit, or similar, may be a component of the remote device 2, wherein the location associated with each consumable installation event is communicated to the smoking substitute device via a short range communication protocol such as Bluetooth™.

The other contextual data S501d may include one or more information types, including: optimal performance parameters S801, a location associated with each activation (e.g. a position coordinate at which each activation begins), the current location of the device, the age of the user of the smoking substitute device 10, a usage constraint, a current consumable level of a consumable 150 physically coupled to the main body 120 of the smoking substitute device, and the current time in the current location of the device.

The optimal performance parameters S801 are preferably determined and configured prior to installation of the machine learning unit 131 in the smoking substitute device 10. The optimal performance parameters may be different for different types and/or manifestations of smoking substitute device. The optimal performance parameters for two smoking substitute devices of the same type and/or manifestations may be preferably identical. The optimal performance parameters may be adjusted on the device by that machine learning algorithm S402 based on the other contextual data S501d. For example, the machine learning algorithm S402 may have been trained to recognise that different performance parameters are preferred by people in different predetermined age ranges. The optimal performance parameters may comprise one or more elements including: information associated with the preferred use of the consumable 150 of the smoking substitute device (e.g. the optimal size of droplets formed when the smoking substitute device is activated), information associated with the flavour of the activation of the smoking substitute device 10, and the optimum amount of nicotine delivered in an activation event. The information associated with the flavour of the activation of the smoking substitute device may include the predetermined optimal mix of one or more flavoured e-liquids contained within the consumable 150 of the smoking substitute device 10. The predetermined optimal mix is preferably a predetermined ratio corresponding to a ratio of the quantities of each of the one or more flavoured e-liquids contained within the consumable of the smoking substitute device.

The location associated with each activation may be a coordinate determined by a GPS unit, or similar. The GPS unit, or similar, may be amongst the additional components 138 of the main body 120 of the smoking substitute device. Alternatively, the GPS unit, or similar, may be amongst the additional components 168 of the consumable 150 of the smoking substitute device 10. Alternatively, the GPS unit, or similar, may be a component of the remote device 2, wherein the location associated with each activation is communicated to the smoking substitute device via a short range communication protocol such as Bluetooth™.

The current location of the device may be a coordinate determined by a GPS unit, or similar. The GPS unit, or similar, may be amongst the additional components 138 of the main body 120 of the smoking substitute device. Alternatively, the GPS unit, or similar, may be amongst the additional components 168 of the consumable 150 of the smoking substitute device. Alternatively, the GPS unit, or similar, may be a component of the remote device wherein the current location of the device is communicated to the smoking substitute device via a short range communication protocol such as Bluetooth™.

The usage constraint may be a quota for the amount of nicotine consumed during a predetermined timeframe. The quota is preferably set by the user of the smoking substitute device. The quota may be, for example, 5 mg of nicotine per day, 10 mg of nicotine per day, 15 mg of nicotine per day, or 20 mg of nicotine per day. For example, the user could input the quota via an application stored on the remote device 2, which is then communicated wirelessly to the smoking substitute device via the wireless network 8 and/or application server 4. Alternatively, the user could input the quota via voice recognition software installed in the audio interface 133 of the main body 120 of the device. Alternatively, the user could input the quota via a graphics user interface (GUI) installed on the display 135 of the main body 120 of the device.

The current consumable level of a consumable 150 physically coupled to the main body 120 of the smoking substitute device may be a level indicative of how much consumable material is contained in the consumable 150, e.g. the mass and/or volume of consumable material contained in the consumable.

The current consumable level of a consumable 150 physically coupled to the main body 120 of the smoking substitute device may be obtained by the consumable 150 of the smoking substitute device 10 and communicated via the electrical interface 160 and the electrical interface 136 to the main body 120 of the smoking substitute device 10. Additionally or alternatively, the consumable level of a consumable 150 physically coupled to the main body 120 of the smoking substitute device may be obtained by the main body 120 of the smoking substitute device 10 via input from the user of the device. For example, the user could input the consumable level of a consumable 150 physically coupled to the main body 120 of the smoking substitute device via an application stored on the remote device 2, which is then communicated wirelessly to the smoking substitute device via the wireless network 8 and/or application server 4. Alternatively, the user could input the consumable level of a consumable 150 physically coupled to the main body 120 of the smoking substitute device via voice recognition software installed in the audio interface 133 of the main body 120 of the device. Alternatively, the user could input the consumable level of a consumable 150 physically coupled to the main body 120 of the smoking substitute deice via a graphics user interface (GUI) installed on the display 135 of the main body 120 of the device.

The machine learning algorithm S402 could be implemented via an artificial neural network (ANN). More specifically, the artificial neural network could be a recurrent neural network (RNN). The recurrent neural network could implement one or more long short-term memory (LTSM) networks. Such networks are well known to those skilled in the art of machine learning.

By way of example, the neural network may implement NN + RNN + LTSM. The neural network could implement one or more GRUs (gated recurrent units).

The machine learning algorithm could be implemented using standard, freely available software, e.g. by implementing one or more of the SciPy, NumPy, Matplotlib, pandas, and scikit-learn (sklearn) libraries of the Python® programming language, the TensorFlow® library, and/or the PyTorch® library. Additionally or alternatively, the machine learning algorithm could be implemented using proprietary licensed software, e.g. MATLAB®. Additionally or alternatively, the machine learning algorithm Such networks are well known to those skilled in the art of machine learning.

The machine learning algorithm S402 is preferably built and trained on a separate system to the smoking substitute device 10, not shown in the figures. Preferably the separate system is an external graphics processing unit (GPU).

The predicted parameters S403 obtained from the machine learning algorithm S402 may include: a time at which or a range of times in which an empty battery event is predicted to occur S503; a time at which or a range of times in which a next activation event is predicted to occur S603; a time at which or a range of times in which an empty consumable event is predicted to occur S703; the predicted parameters for the next activation S803; one or more parameters indicative of a number of predicted activations S603, S903a, S903b of the smoking substitute device 10 over a predetermined period of time S901; and the number of predicted activations of the smoking substitute device over a predetermined period of time S903c.

The time at which or a range of times in which an empty battery event is predicted to occur S503 may be expressed in the form of an absolute time (e.g. Wednesday 16 October 2019 at 14:00), as a relative time (e.g. 48 hours 52 minutes from now), or as a range of times (expressed in absolute or relative forms, e.g. 42 hours-46 hours from now). An empty battery event may be understood as an event in which charge in a battery 128 of the smoking substitute device 10 decreases to a level at which the smoking substitute device cannot be activated (e.g. because there is not enough charge for an activation to take place, or the charge in the battery of the smoking substitute device is such that a control unit of the smoking substitute device will prevent an activation from taking place to avoid damage to the battery 128).

The time at which or a range of times in which a next activation event is predicted to occur S603 may be expressed in the form of an absolute time (e.g. Wednesday 16 October 2019 at 14:00), as a relative time (e.g. 48 hours 52 minutes from now), or as a range of times (expressed in absolute or relative forms, e.g. 42 hours-46 hours from now). The time at which or range of times in which a next activation event is predicted to occur may include a predicted duration of the next activation event. The predicted duration of the next activation event may be understood to be a length of time corresponding to how long the device is predicted to be activated for the next activation event. A next activation event may be understood as an event in which the smoking substitute device 10 is next activated by the user of the device.

The time at which or a range of times in which an empty consumable event is predicted to occur S703 may be expressed in the form of an absolute time (e.g. Wednesday 16 October 2019 at 14:00), as a relative time (e.g. 48 hours 52 minutes from now), or as a range of times (expressed in absolute or relative forms, e.g. 42 hours-46 hours from now). An empty consumable event may be understood as an event in which consumable material in a consumable 150 physically coupled to a main body 120 of the smoking substitute device 10 decreases to a level at which the smoking substitute device will not function properly (e.g. because there is not enough consumable material for an activation to take place, or the amount of consumable material in the consumable is such that an activation will result in improper delivery of vapour).

The predicted parameters for next activation may comprise one or more elements including: information associated with the preferred use of the consumable 150 of the smoking substitute device (e.g. the predicted size of droplets formed when the smoking substitute device is activated), information associated with the predicted flavour of the activation of the smoking substitute device 10, and the predicted amount of nicotine delivered in an activation event. The information associated with the flavour of the activation of the smoking substitute device may include the predicted mix of one or more flavoured e-liquids contained within the consumable 150 of the smoking substitute device 10. The predicted mix is preferably a predicted ratio corresponding to a ratio of the quantities of each of the one or more flavoured e-liquids contained within the consumable of the smoking substitute device.

The one or more parameters indicative of a number of predicted activations S603, S903a, S903b of the smoking substitute device 10 over a predetermined period of time S901 may include a time at which or a range of times in which a next activation event is predicted to occur S603, a predicted average time between activations S903a, and other indicative predicted parameters S903b.

The time at which or a range of times in which a next activation event is predicted to occur S603 may be expressed in the form of an absolute time (e.g. Wednesday 16 October 2019 at 14:00), as a relative time (e.g. 48 hours 52 minutes from now), or as a range of times (expressed in absolute or relative forms, e.g. 42 hours-46 hours from now). The time at which or range of times in which a next activation event is predicted to occur may include a predicted duration of the next activation event. The predicted duration of the next activation event may be understood to be a length of time corresponding to how long the device is predicted to be activated for the next activation event. A next activation event may be understood as an event in which the smoking substitute device 10 is next activated by the user of the device.

The predicted average time between activations S903a may be expressed in the form of a series of absolute times (e.g. Wednesday 16 October 2019 at 14:00, Wednesday 16 October 2019 at 17:17, etc.), a relative time (e.g. 3 hours 17 minutes), or as a range of times (expressed in absolute or relative forms, e.g. 3-4 hours). The predicted average time between activations may be considered to be the predicted time average time between the start of two typical sequential activation events.

The number of predicted activations of the smoking substitute device over a predetermined period of time S903c may be expressed as a rate (eg. 12 activations per day), as a number of activations within an absolute time period (e.g. 12 activations between 9:00 and 20:00), or as frequency of activations (e.g. 1 activation every hour).

Optionally, the predicted parameters S403 are used to provide feedback S404 to the user of the smoking substitute device 10. This may be done as audible feedback wherein the audio interface 133 of the main body 120 of the smoking substitute device 10 emits audible information corresponding to the feedback S404. Additionally or alternatively, this may be done as visual feedback wherein the display 135 of the main body 120 of the smoking substitute device 10 displays visual information corresponding to the feedback S404. Additionally or alternatively, this may be done as haptic feedback wherein the haptic feedback unit 139 of the main body 120 of the smoking substitute device 10 emits haptic information corresponding to the feedback S404. Additionally or alternatively, this may be done by communicating the feedback to the remote device 2. The communication between the smoking substitute device 10 and the remote device 2 may be via a low power wide area network (LPWAN), e.g. the Narrowband Internet of Things (NB-loT). Additionally or alternatively, the communication may be via alternative Internet of Things (loT) connections. Additionally or alternatively, the communication may be via a short range communication protocol, e.g. Bluetooth™. The remote device 2 may be a smartphone.

When the feedback S404 is communicated to the user via communication with a remote device, the information transmitted from the smoking substitute device 10 to the remote device 2 does not include the usage or contextual data S401. Additionally, the predicted parameters S403 may not be transmitted from the smoking substitute device 10 to the remote device 2.

The feedback S404 may comprise information corresponding to the results of the machine learning algorithm S402, prompts to the user to perform one or more actions, and/or one or more suggestions to change the configuration settings S404a of the smoking substitute device 10. The precise information, one or more prompts, and/or one or more suggestions are dependent upon what the machine learning algorithm is configured to determine and output from a range of predetermined inputs.

In some examples, the user may be required to permit the one or more suggestions to change the configuration settings S405. In this case, the one or more suggested changes to the configuration settings are implemented S406, only after the user permits the change in step S405.

In some embodiments of the present invention, the machine learning algorithm S402 is configured to determine a time at which or a range of times in which an empty battery event is predicted to occur S503. As depicted in Figure 5(a), the usage and contextual data S401 may include: power level information S501a associated with the power level of the power source 128 of the main body 120 of the smoking substitute device 10; a time associated with each activation S501b (e.g. a time at which each activation begins); a duration associated with each activation S501c (e.g. a length of time corresponding to how long the device is activated for each activation); and other contextual data S501d.

As depicted in Figure 5(a), the feedback to the user may include: a prompt to the user to charge the device S504a before the time at which or the range of times in which an empty battery event is predicted to occur. Additionally or alternatively, it may include an alert S504b to provide the time at which or the range of times in which an empty battery event is predicted to occur. Additionally or alternatively, as depicted in Figure 5(b), it may include one or more suggestions to change the configuration settings to reduce the power consumption of the device S504c. The user may permit one or more of the suggested changes to the configuration settings S405, in which case the device will implement the one or more permitted changes to the configuration settings S406.

The prompt to the user to charge the device S504a before the time at which or the range of times in which an empty battery event is predicted to occur may be issued at a time determined by the machine learning algorithm S402, taking account of the inputted usage and contextual data S401. For example, the machine learning algorithm may predict the time or range of times of one or more potential charging events. The one or more potential charging events may correspond to a time or range of times that the user is predicted to be in a location where it is possible to charge the smoking substitute device 10 before the time at which or the range of times in which an empty battery event is predicted to occur. The prompt to the user to charge the device S504a, therefore, may be issued at the time or range of times of the one or more potential charging events. Additionally or alternatively, the prompt to the user to charge the device may be issued when the machine learning algorithm determines that the user is in a location where it is possible to charge the smoking substitute device and there is less than a first predetermined period of time before the time at which or range of times in which an empty battery event is predicted to occur. The first predetermined period of time may be, e.g. 30 minutes, 1 hour, 2 hours, 3 hours, 4 hours. Additionally or alternatively, the prompt to the user to charge the device may be issued when there is less than a second predetermined period of time before the time at which or range of times in which an empty battery event is predicted to occur, regardless of the present location of the user. The second predetermined period of time may be, e.g. 5 minutes, 10 minutes, 30 minutes, 1 hour, 2 hours. The prompt to the user to charge the device S504a before the time at which or the range of times in which an empty battery event is predicted to occur may be uniquely distinguishable from any other feedback S404 provided to the user.

The alert S504b to provide the time at which or the range of times in which an empty battery event is predicted to occur may be issued at a time determined by the machine learning algorithm S402, taking account of the inputted usage and contextual data S401. For example, the machine learning algorithm may predict the time or range of times of one or more potential charging events. The one or more potential charging events may correspond to a time or range of times that the user is predicted to be in a location where it is possible to charge the smoking substitute device 10 before the time at which or the range of times in which an empty battery event is predicted to occur. The alert S504b, therefore, may be issued at the time or range of times of the one or more potential charging events. Additionally or alternatively, the alert S504b may be issued when the machine learning algorithm determines that the user is in a location where it is possible to charge the smoking substitute device and there is less than a first predetermined period of time before the time at which or range of times in which an empty battery event is predicted to occur. The first predetermined period of time may be, e.g. 30 minutes, 1 hour, 2 hours, 3 hours, 4 hours. Additionally or alternatively, the alert S504b may be issued when there is less than a second predetermined period of time before the time at which or range of times in which an empty battery event is predicted to occur, regardless of the present location of the user. The second predetermined period of time may be, e.g. 5 minutes, 10 minutes, 30 minutes, 1 hour, 2 hours. The alert S504b may be uniquely distinguishable from any other feedback S404 provided to the user.

The one or more suggestions to change the configuration settings to reduce the power consumption of the device S504c may be issued at a time determined by the machine learning algorithm S402, taking account of the inputted usage and contextual data S401. For example, the machine learning algorithm may predict the time or range of times of one or more potential charging events. The one or more potential charging events may correspond to a time or range of times that the user is predicted to be in a location where it is possible to charge the smoking substitute device 10 before the time at which or the range of times in which an empty battery event is predicted to occur. The one or more suggestions to change the configuration settings to reduce the power consumption of the device S504c may be issued if it is predicted by the machine learning algorithm that the next empty battery event will occur before the next potential charging event. Additionally or alternatively, the one or more suggestions to change the configuration setting to reduce the power consumption of the device may be issued when there is no more than a predetermined period of time before the time at which or range of times in which an empty battery event is predicted to occur. The predetermined period of time may be, e.g. 6 hours, 8 hours, 12 hours, 24 hours. The one or more suggestions to change the configuration settings to reduce power consumption may include: reducing the power consumption of the heating device 162 of the consumable 150 of the smoking substitute device 10; reducing the brightness of the display and/or other settings of the display 135 of the main body 120 of the smoking substitute device 10; and disconnecting the wireless interface 134 of the main body of the smoking substitute device from the network 8 and/or application server 4.

In some embodiments of the present invention, the machine learning algorithm S402 is configured to determine a time at which or a range of times in which a next activation event is predicted to occur S603. As depicted in Figure 6(a), the usage and contextual data S401 may include: power level information S501a associated with the power level of the power source 128 of the main body 120 of the smoking substitute device 10; a time associated with each activation S501b (e.g. a time at which each activation begins); a duration associated with each activation S501c (e.g. a length of time corresponding to how long the device is activated for each activation); and other contextual data S501d.

As depicted in Figure 6(a), the feedback to the user may include: a prompt to the user to activate the device S604a. Additionally or alternatively, it may include an alert S604b to provide the time at which or the range of times in which a next activation event is predicted to occur. Additionally or alternatively, the alert S604b may provide the user with the predicted duration of a next activation event. Additionally or alternatively, as depicted in Figure 5(b), it may include one or more suggestions to change the configuration settings to ready the device in advance of a next activation event S504c. The user may permit one or more of the suggested changes to the configuration settings S405, in which case the device will implement the one or more permitted changes to the configuration settings S406.

The prompt to the user to activate the device S604a may be issued a first predetermined period of time before the time at which or a range of times in which a next activation event is predicted to occur. The first predetermined time may be, e.g. 10 seconds, 30 seconds, 1 minute, 2 minutes, 5 minutes. Additionally or alternatively, the prompt to the user to activate the device may be issued a second predetermined period of time after the time at which or a range of times in which a next activation event is predicted to occur, if an activation event did not occur before the second predetermined period of time after the time at which or the range of times in which a next activation event is predicted to occur has elapsed. The second predetermined period of time may be, e.g. 1 minute, 2 minutes, 5 minutes, 10 minutes. The prompt to the user to activate the device S604a may be uniquely distinguishable from any other feedback S404 provided to the user.

The alert S604b to provide the time at which or the range of times in which a next activation event is predicted to occur may be issued immediately after an activation event has occurred. Additionally or alternatively, the alert S604b may be issued a first predetermined period of time before the time at which or the range of times in which a next activation event is predicted to occur. The first predetermined period of time may be, e.g. 1 minute, 2 minutes, 5 minutes, 10 minutes, 30 minutes, 1 hour. The alert S604b may be uniquely distinguishable from any other feedback S404 provided to the user.

The one or more suggestions to change the configuration settings to ready the device in advance of a next activation event S504c may include: activating the heating device 162 of the consumable 150 of the smoking substitute device 10 a first predetermined period of time before the time at which or range of times in which a next activation event is predicted to occur; increasing the power consumption of the power source 128 of the main body 120 of the smoking substitute device 10 a second predetermined period of time before the time at which or range of times in which a next activation event is predicted to occur; and/or using the machine learning algorithm S402 to optimise the performance parameters of the next activation event a third predetermined period of time before the time at which or range of times in which a next activation event is predicted to occur. The first predetermined period of time may be, e.g. 1 second, 2 seconds, 5 seconds, 10 seconds, 30 seconds, 1 minute. The second predetermined period of time may be, e.g. 1 second, 2 seconds, 5 seconds, 10 seconds, 30 seconds, 1 minute. The third predetermined period of time may be, e.g. 1 second, 2 seconds, 5 seconds, 10 seconds, 30 seconds, 1 minute. The optimisation of the performance parameters of the next activation event may be performed by, for example, implementing the method shown in Figure 8. The one or more suggestions to change the configuration settings to ready the device in advance of a next activation event S504c may be uniquely distinguishable from any other feedback S404 provided to the user.

Figure 6(c) shows a method by which it may be determined to issue the prompt to prompt to the user to activate the device S604a. In step S605, the time at which or range of times in which a next activation event is predicted to occur is compared with the current time S607. If the current time is less than a first predetermined period of time before the time at which or range of times in which a next activation event is predicted to occur, then the prompt to the user to activate the device S604a is issued. Otherwise, after a second predetermined period of time, a repeat of the comparison between the time at which or the range of times during which a next activation event is predicted to occur and the updated current time is carried out. The first predetermined period of time may be, e.g. 1 minute, 2 minutes, 5 minutes, 10 minutes. The second predetermined period of time may be e.g. 30 seconds, 1 minute, 2 minutes, 5 minutes, 10 minutes.

In some embodiments of the present invention, the machine learning algorithm S402 is configured to determine a time at which or a range of times in which an empty consumable event is predicted to occur S603. As depicted in Figure 7(a), the usage and contextual data S401 may include: a time associated with each consumable installation event S701 (e.g. a time at which a new consumable 150 was physically coupled to the main body 120); power level information S501a associated with the power level of the power source 128 of the main body 120 of the smoking substitute device 10; a time associated with each activation S501b (e.g. a time at which each activation begins); a duration associated with each activation S501c (e.g. a length of time corresponding to how long the device is activated for each activation); and other contextual data S501d.

As depicted in Figure 7(a), the feedback to the user may include: a prompt to the user to replace the consumable S704a. Additionally or alternatively, it may include an alert S704b to provide the user the time at which or the range of times in which an empty consumable event is predicted to occur. Additionally or alternatively, it may include an alert S704c to communicate the time at which or the range of times in which an empty consumable event is predicted to occur to a secure low power wide area network (LWPAN) such as the Narrowband Internet of Things (NB-loT). Additionally or alternatively, as depicted in Figure 7(b), it may include one or more suggestions to change the configuration settings to reduce the rate of consumable consumption S504c. The user may permit one or more of the suggested changes to the configuration settings S405, in which case the device will implement the one or more permitted changes to the configuration settings S406.

The prompt to the user to replace the consumable S704a before the time at which or the range of times in which an empty consumable event is predicted to occur may be issued at a time determined by the machine learning algorithm S402, taking account of the inputted usage and contextual data S401. For example, the machine learning algorithm may predict the time or range of times of one or more potential replacement events. The one or more potential replacement events may correspond to a time or range of times that the user is predicted to be in a location where it is likely that the user will have access to a replacement consumable 150, e.g. at home, before the time at which or the range of times in which an empty consumable event is predicted to occur. The prompt to the user to replace the consumable S704a, therefore, may be issued at the time or range of times of the one or more potential replacement events. Additionally or alternatively, the prompt to the user to replace the consumable may be issued when the machine learning algorithm determines that the user is in a location where it is likely that the user will have access to a replacement consumable and there is less than a first predetermined period of time before the time at which or range of times in which an empty consumable event is predicted to occur. The first predetermined period of time may be, e.g. 1 hour, 2 hours, 3 hours, 6 hours, 12 hours. Additionally or alternatively, the prompt to the user to replace the consumable may be issued when there is less than a second predetermined period of time before the time at which or range of times in which an empty consumable event is predicted to occur, regardless of the present location of the user. The second predetermined period of time may be, e.g. 10 minutes, 30 minutes, 1 hour, 2 hours. The prompt to the user to replace the consumable S704a before the time at which or the range of times in which an empty battery event is predicted to occur may be uniquely distinguishable from any other feedback S404 provided to the user.

The alert S704b to provide the user with the time at which or the range of times in which an empty consumable event is predicted to occur may be issued at a time determined by the machine learning algorithm S402, taking account of the inputted usage and contextual data S401. For example, the machine learning algorithm may predict the time or range of times of one or more potential replacement events. The one or more potential replacement events may correspond to a time or range of times that the user is predicted to be in a location where it is likely that the user will have access to a replacement consumable 150, e.g. at home, before the time at which or the range of times in which an empty consumable event is predicted to occur. The alert S704b, therefore, may be issued at the time or range of times of the one or more potential replacement events. Additionally or alternatively, the alert S704b may be issued when the machine learning algorithm determines that the user is in a location where it is likely that the user will have access to a replacement consumable and there is less than a first predetermined period of time before the time at which or range of times in which an empty battery event is predicted to occur. The first predetermined period of time may be, e.g. 1 hour, 2 hours, 3 hours, 6 hours, 12 hours. Additionally or alternatively, the alert S704b may be issued when there is less than a second predetermined period of time before the time at which or range of times in which an empty consumable event is predicted to occur, regardless of the present location of the user. The second predetermined period of time may be, e.g. 10 minutes, 30 minutes, 1 hour, 2 hours. The alert S704b may be uniquely distinguishable from any other feedback S404 provided to the user.

The alert S704c to provide a secure low power wide area network (LWPAN) such as the Narrowband Internet of Things (NB-IoT) with the time at which or the range of times in which an empty consumable event is predicted to occur may be issued at a time determined by the machine learning algorithm S402, taking account of the inputted usage and contextual data S401. The alert 704c may be issued a predetermined period of time before the time at which or the range of times in which an empty consumable event is predicted to occur. The predetermined period of time may correspond to a typical time for online purchase and delivery of a replacement consumable. The predetermined period of time may be e.g., 1 day, 2 days, 3 days, 4 days, 5 days. The alert S704c may be uniquely distinguishable from any other feedback S404 provided to the user and/or the secure LWPA, e.g. the NB-loT.

The one or more suggestions to change the configuration settings to reduce the consumable consumption S704d may be issued at a time determined by the machine learning algorithm S402, taking account of the inputted usage and contextual data S401. For example, the machine learning algorithm may predict the time or range of times of one or more potential replacement events. The one or more potential replacement events may correspond to a time or range of times that the user is predicted to be in a location where it is likely that the user will have access to a replacement consumable 150, e.g. at home, before the time at which or the range of times in which an empty consumable event is predicted to occur. The one or more suggestions to change the configuration settings to reduce the consumable consumption of the device S704d may be issued if it is predicted by the machine learning algorithm that the next empty consumable event will occur before the next potential replacement event. Additionally or alternatively, the one or more suggestions to change the configuration setting to reduce the consumable consumption of the device may be issued when there is less than a predetermined period of time before the time at which or range of times in which an empty consumable event is predicted to occur. The predetermined period of time may be, e.g. 10 minutes, 30 minutes, 1 hour, 2 hours, 3 hours. The one or more suggestions to change the configuration settings to reduce power consumption may include: reducing the power consumption of the heating device 162 of the consumable 150 of the smoking substitute device 10; reducing the duration of an activation event of the device by an amount determined by the user; reducing the heating temperature of the heating device 162 of the consumable 150 of the smoking substitute device to reduce the amount of vapour produced during each activation event.

Figure 7(c) shows a method by which the alert provided to the secure low power wide area network (LWPAN), e.g. the Narrowband Internet of Things (loT) S704c is used to automatically determine when to buy a replacement consumable 150. In step S705, the time at which or range of times in which an empty consumable event is predicted to occur is compared with the current time S707. If the current time is less than a first predetermined period of time before the time at which or range of times in which an empty consumable event is predicted to occur, then a prompt to the LWPAN, e.g. NB-loT is issued to purchase a replacement consumable 150. Otherwise, after a second predetermined period of time, a repeat of the comparison between the time at which or the range of times during which an empty consumable event is predicted to occur and the updated current time is carried out. The first predetermined period of time may be, e.g. 1 day, 2 days, 3 days, 4 days, 5 days. The second predetermined period of time may be, e.g. 1 day, 2 days, 3 days, 4 days, 5 days, 7 days.

In some embodiments of the present invention, the machine learning algorithm S402 is configured to optimise the parameters of the next activation event of the smoking substitute device 10. As depicted in Figure 8, the usage and contextual data S401 may include: optimal performance parameters S801; a time associated with each consumable installation event S701 (e.g. a time at which a new consumable 150 was physically coupled to the main body 120); power level information S501a associated with the power level of the power source 128 of the main body 120 of the smoking substitute device 10; a time associated with each activation S501b (e.g. a time at which each activation begins); a duration associated with each activation S501c (e.g. a length of time corresponding to how long the device is activated for each activation); and other contextual data S501d.

The optimal performance parameters S801 are preferably determined and configured prior to installation of the machine learning unit 131 in the smoking substitute device 10. The optimal performance parameters may be different for different types and/or manifestations of smoking substitute device. The optimal performance parameters for two smoking substitute devices of the same type and/or manifestations may be preferably identical. The optimal performance parameters may be adjusted on the device by that machine learning algorithm S402 based on the other contextual data S501d. For example, the machine learning algorithm S402 may have been trained to recognise that different performance parameters are preferred by people in different predetermined age ranges. The optimal performance parameters may comprise one or more elements including: information associated with the preferred use of the consumable 150 of the smoking substitute device (e.g. the optimal size of droplets formed when the smoking substitute device is activated), information associated with the flavour of the activation of the smoking substitute device 10, and the optimum amount of nicotine delivered in an activation event. The information associated with the flavour of the activation of the smoking substitute device may include the predetermined optimal mix of one or more flavoured e-liquids contained within the consumable 150 of the smoking substitute device 10. The predetermined optimal mix is preferably a predetermined ratio corresponding to a ratio of the quantities of each of the one or more flavoured e-liquids contained within the consumable of the smoking substitute device.

In some embodiments of the present invention, the machine learning algorithm S402 is configured to collate the usage and contextual data S401 to infer patterns based on the times, durations and/or locations of activation events of the smoking substitute device.

The machine algorithm S402 uses the above mentioned usage and contextual data S501a, S501b, S501c, S501d, S701, S801 to determine a set of predicted parameters for the next activation event of the device S803. The predicted parameters S801 are compared to the optimal performance parameters S801 (e.g. the optimal size of droplets formed when the smoking substitute device is activated). If the predicted parameters do not match the optimal performance parameters, then the configuration settings of the device are adjusted S805. The predicted parameters of the next activation are then predicted again, including consideration of the adjusted configuration settings of the device. This process is repeated until the predicted parameters match the optimal performance parameters.

Adjusting the configuration settings of the device may include: adjusting the power consumption of the heating device 162 of the consumable 150 of the smoking substitute device 10; adjusting the duration of an activation event of the device; and/or adjusting the mix of one or more flavoured e-liquids contained within the consumable 150 of the smoking substitute device 10.

If the predicted parameters for the next activation event of the device S803 match the optimal performance parameters S804, then an alert is issued to the user notifying them that the smoking substitute device 10 is ready for use S806.

In some embodiments of the present invention, the machine learning algorithm S402 is configured to adjust the amount of nicotine delivered per activation event of the device according to whether the usage of the device is greater or less than a predicted number of activations within a first predetermined peiord of time. As depicted in Figure 9, the usage and contextual data S401 may include: the duration of the first predetermined period of time S901; power level information S501a associated with the power level of the power source 128 of the main body 120 of the smoking substitute device 10; a time associated with each activation S501b (e.g. a time at which each activation begins); a duration associated with each activation S501c (e.g. a length of time corresponding to how long the device is activated for each activation); and other contextual data S501d.

The machine learning algorithm S402 determines a series of predicted parameters indicative of a number of predicted activations. The predicted parameters indicative of a number of predicted activations may include: a predicted time and duration associated with the next activation event S603 (e.g. a time at which or range of times in which the next activation event is expected to occur and a length of time for which or a range of lengths of time for which the next activation event is expected to last); a predicted average time associated with the time between activation events S903a (e.g. a period of time which is the mean or median of the periods of time expected to pass between consecutive activation events); and/or other indicative predicted parameters S903b. The other indicative predicted parameters may include some or all of the usage and contextual data S401.

The predicted parameters indicative of a number of predicted activations are fed back into the machine learning algorithm as inputs S902. This iteration of the machine learning algorithm determines a predicted number of activations in a second predetermined period of time S903c. The second predetermined period of time may be the same as the first predetermined period of time S901.

The actual rate of activation events is then compared to the predicted number of activations in the second predetermined period of time (or equivalently predicted rate of activation events) S904. If the actual rate of activation events is higher than the predicted rate of activation events, the amount of nicotine delivered per activation is reduced S905a. The extent of the reduction in the amount of nicotine delivered per activation may be linearly proportional to the difference between the predicted rate of activation events and the actual rate of activation events. If the actual rate of activation events is lower than the predicted rate of activation events, the amount of nicotine delivered per activation is increased S905b. The extent of the increase in the amount of nicotine delivered per activation may be linearly proportional to the difference between the predicted rate of activation events and the actual rate of activation events. If the actual rate of activation events is equal to the predicted rate of activation events, the amount of nicotine delivered per activation is maintained S905c.

The amount of nicotine delivered per activation may be adjusted by adjusting the power consumption of the heating device 162 of the consumable 150 of the smoking substitute device 10 to adjust the amount of vapour produced in each activation event.

The machine learning unit 131 may be further configured to run a machine learning algorithm using the usage and contextual data S401 and the predicted parameters S403 to determine a predicted customer lifetime value (PCLV) of the device for the user. In some example, the PCLV and no other data is configure to be transmitted from the smoking substitute device 10 to a remote device. The remote device, in this example, may be a central application server 4 to be accessed by the manufacturer of the smoking substitute device 10.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

The following statements, which are not claims, provide general expressions of the disclosure herein:
A1. A smoking substitute device configured to generate an aerosol from an aerosol forming substrate, the device comprising: at least one processor configured to run a machine learning model; wherein the machine learning model is configured to receive usage data relating to usage of the smoking substitute device by a user, and based on that usage data, to determine one or more predicted parameters relating to future usage of the smoking substitute device by the user.
A2. A smoking substitute device according to statement 1, wherein the machine learning model is configured based on usage data from a plurality of other devices.
A3. A smoking substitute device according to statement 1 or 2, wherein the machine learning model is a deep learning machine learning model.
A4. A smoking substitute device according to any previous statement, wherein the smoking substitute device includes a wireless interface, wherein the smoking substitute device is configured to communicate wirelessly with an external device.
A5. A smoking substitute device according to any previous statement, wherein the smoking substitute device is configured to communicate the one or more predicted parameters or information derived from the one or more predicted parameters to the external device.
A6. A smoking substitute device according to any previous statement, wherein the smoking substitute device is configured to communicate the one or more predicted parameters or information derived from the one or more predicted parameters to the external device, without communicating the usage data, or sensitive portions of the usage data, on which the one or more predicted parameters are based.
A7. A smoking substitute device according to any previous statement, wherein the usage data on which the one or more predicted parameters are based include, for a plurality of activations of the device: a time associated with each activation; and a duration associated each activation.
A8. A smoking substitute device according to any previous statement, wherein the usage data on which the one or more predicted parameters are based includes, for a plurality of charging events of the device: a time associated with each charging event; and a duration associated each charging event; optionally, a location associated with each charging event.
A9. A smoking substitute device according to any previous statement, wherein the smoking substitute device has a main body configured to be physically coupled to a consumable, and the usage data on which the one or more predicted parameters are based includes, for a plurality of consumable installation events of the device: a time associated with each consumable installation event; optionally, a consumable level associated with each consumable installation event; optionally, a location associated with each consumable installation event.
A10. A smoking substitute device according to any previous statement, wherein the machine learning model is configured to receive contextual data, and based on the usage data and contextual data, to determine the one or more predicted parameters relating to future usage of the smoking substitute device by the user, wherein the contextual information includes one or more of: information indicative of an age of the user; a usage constraint which places a restriction on how the smoking substitute device is used; a current battery level of the smoking substitute device; a current location of the smoking substitute device; a current consumable level of a consumable physically coupled to a main body of the smoking substitute device; a predetermined set of optimal performance parameters.
A11. A smoking substitute device according to any previous statement, wherein the one or more predicted parameters include: a time at which or a range of times in which an empty battery event is predicted to occur.
A12. A smoking substitute device according to any previous statement, wherein the one or more predicted parameters include: a time at which or a range of times in which a next activation event is predicted to occur.
A13. A smoking substitute device according to any previous statement, wherein the one or more predicted parameters include: a time at which or a range of times in which an empty consumable event is predicted to occur.
A14. A smoking substitute device according to any previous statement, wherein the one or more predicted parameters include: one or more parameters indicative of the performance of the device for a next activation event.
A15. A smoking substitute device according to any previous statement, wherein the one or more predicted parameters include: one or more parameters indicative of a number of predicted activations of the smoking substitute device over a predetermined period of time
A16. A smoking substitute device according to any previous statement, wherein the one or more predicted parameters include: the number of predicted activations of the smoking substitute device over a predetermined period of time
A17. A smoking substitute device according to any previous statement, wherein the smoking substitute device is configured to change at least one configuration setting of the smoking substitute device, based on the one or more predicted parameters.
A18. A smoking substitute device according to any previous statement, wherein the smoking substitute device is configured to change at least one configuration setting of the smoking substitute device, based on the one or more predicted parameters, subject to input from a user of the smoking substitute device.
A19. A smoking substitute device according to statement 18, wherein the smoking substitute device is configured to change at least one configuration setting of the smoking substitute device, based on the one or more predicted parameters, subject to input from a user of the smoking substitute device by: suggesting one or more changes to at least one configuration setting of the smoking substitute device, based on the one or more predicted parameters, to the user of the smoking substitute device; if the user gives permission for a suggested change to be made, implementing the suggested change.
A20. A smoking substitute device according to any previous statement, wherein the smoking substitute device includes at least one feedback device, wherein the smoking substitute device is configured to use the at least one feedback device to provide feedback to the user based on the one or more predicted parameters.
A21. A smoking substitute device according to statement 20, wherein the one or more predicted parameters include a time at which or a range of times in which an empty battery event is predicted to occur, and the smoking substitute device is configured to use the at least one feedback device to: provide the user with information informing the user of the predicted time or range of times; and/or prompt a user to charge their device, based on the predicted time or range of times.
A22. A smoking substitute device according to any previous statement, wherein the one or more predicted parameters include a time at which or a range of times in which an empty battery event is predicted to occur, and the smoking substitute device is configured to use the at least one feedback device to: suggest one or more changes to the configuration settings of the smoking substitute device to reduce the power consumption of the device; implement any of the one or more suggested changes to the configuration settings of the smoking substitute device that are selected by the user.
A23. A smoking substitute device according to any previous statement, wherein the one or more predicted parameters include a time at which or a range of times in which, a next activation event is predicted to occur, and the smoking substitute device is configured to use the at least one feedback device to: if the device is not used by that time or by the end of the range of times, prompt the user to use their smoking substitute device.
A24. A smoking substitute device according to any previous statement, wherein the one or more predicted parameters include a time at which or a range of times in which an empty consumable event is predicted to occur, and the smoking substitute device is configured to use the at least one feedback device to: provide feedback to the user to inform the user of the predicted time or range of times.
A25. A smoking substitute device according to any previous statement, wherein the one or more predicted parameters include one or more parameters indicative of the performance of the device for a next activation event, and the smoking substitute device is configured to: compare the one or more parameters indicative of the performance of the device for a next activation event with one or more predetermined parameters indicative of an optimal performance of the smoking substitute device for a next activation event; if the one or more parameters indicative of the performance of the device for a next activation event do not match the corresponding one or more predetermined parameters indicative of an optimal performance of the smoking substitute device for a next activation event: adjust one or more of the configuration settings of the smoking substitute device to adjust the one or more parameters indicative of the performance of the device for a next activation event; repeat the comparison of the one or more parameters indicative of the performance of the device for a next activation event with one or more predetermined parameters indicative of an optimal performance of the smoking substitute device for a next activation event and corresponding adjustment of the one or more parameters indicative of the performance of the smoking substitute device for a next activation event until the one or more parameters indicative of the performance of the device for a next activation event match the corresponding one or more predetermined parameters indicative of an optimal performance of the smoking substitute device for a next activation event; if the one or more parameters indicative of the performance of the device for a next activation event do match the corresponding one or more predetermined parameters indicative of an optimal performance of the smoking substitute device for a next activation event: use the at least one feedback device to provide feedback to the user to inform the user that the smoking substitute device is ready for the next activation event.
A26. A smoking substitute device according to any previous statement, wherein the one or more predicted parameters include one or more parameters indicative of a number of predicted activations of the smoking substitute device over a predetermined period of time, and the smoking substitute device is configured to use the at least one feedback device to: if the number of actual activations is higher than the one or more parameters indicative of a number of predicted activations over the predetermined period of time, provide an indication to the user that their usage is higher than expected.
A27. A smoking substitute device according to any previous statement, wherein the one or more predicted parameters include the number of predicted activations of the smoking substitute device over a predetermined period of time, and the smoking substitute device is configured to: if the rate of actual activations is indicative of a higher number of actual activations over the predetermined period of time than the number of predicted activations over the predetermined period of time, reduce the amount of nicotine delivered per activation event of the smoking substitute device; if the rate of actual activations is indicative of a lower number of actual activations over the predetermined period of time than the number of predicted activations over the predetermined period of time, increase the amount of nicotine delivered per activation event of the smoking substitute device; if the rate of actual activations is indicative of the same number of actual activations over the predetermined period of time as the number of predicted activations over the predetermined period of time, maintain the amount of nicotine delivered per activation event of the smoking substitute device.
A28. A method of operating a smoking substitute device, the smoking substitute device comprising at least one processor configured to run a machine learning model, wherein the method comprises: the machine learning model receiving usage data relating to usage of the smoking substitute device by a user, and based on that usage data, determining one or more predicted parameters relating to future usage of the smoking substitute device by the user
A29. A computer readable medium comprising a computer readable instructions configured to, when executed, cause a smoking substitute device to perform a method of operating a smoking substitute device, the smoking substitute device comprising at least one processor configured to run a machine learning model, wherein the method comprises: the machine learning model receiving usage data relating to usage of the smoking substitute device by a user, and based on that usage data, determining one or more predicted parameters relating to future usage of the smoking substitute device by the user.
A30. Electrical circuitry comprising: at least one processor configured to run a machine learning model; wherein the machine learning model is configured to receive usage data relating to usage of the smoking substitute device by a user, and based on that usage data, to determine one or more predicted parameters relating to future usage of the smoking substitute device by the user.

## Claims

1. A smoking substitute device configured to generate an aerosol from an aerosol forming substrate, the device comprising:
at least one processor configured to run a machine learning model;
wherein the machine learning model is configured to receive usage data relating to usage of the smoking substitute device by a user, and based on that usage data, to determine one or more predicted parameters relating to future usage of the smoking substitute device by the user.

2. A smoking substitute device according to claim 1, wherein:
the machine learning model is configured based on usage data from a plurality of other devices; and/or
the machine learning model is a deep learning machine learning model.

3. A smoking substitute device according to any previous claim, wherein the smoking substitute device includes a wireless interface, wherein the smoking substitute device is configured to communicate wirelessly with an external device, wherein the smoking substitute device is configured to communicate the one or more predicted parameters or information derived from the one or more predicted parameters to the external device, without communicating the usage data, or sensitive portions of the usage data, on which the one or more predicted parameters are based.

4. A smoking substitute device according to any previous claim, wherein the usage data on which the one or more predicted parameters are based include, for a plurality of activations of the device:
a time associated with each activation; and
a duration associated each activation.

5. A smoking substitute device according to any previous claim, wherein the usage data on which the one or more predicted parameters are based includes, for a plurality of charging events of the device:
a time associated with each charging event; and
a duration associated each charging event;
optionally, a location associated with each charging event.

6. A smoking substitute device according to any previous claim, wherein the smoking substitute device has a main body configured to be physically coupled to a consumable, and the usage data on which the one or more predicted parameters are based includes, for a plurality of consumable installation events of the device:
a time associated with each consumable installation event;
optionally, a consumable level associated with each consumable installation event;
optionally, a location associated with each consumable installation event.

7. A smoking substitute device according to any previous claim, wherein the machine learning model is configured to receive contextual data, and based on the usage data and contextual data, to determine the one or more predicted parameters relating to future usage of the smoking substitute device by the user, wherein the contextual information includes one or more of:
information indicative of an age of the user;
a usage constraint which places a restriction on how the smoking substitute device is used;
a current battery level of the smoking substitute device;
a current location of the smoking substitute device;
a current consumable level of a consumable physically coupled to a main body of the smoking substitute device;
a predetermined set of optimal performance parameters.

8. A smoking substitute device according to any previous claim, wherein the one or more predicted parameters include any one or more of:
a time at which or a range of times in which an empty battery event is predicted to occur;
a time at which or a range of times in which a next activation event is predicted to occur;
a time at which or a range of times in which an empty consumable event is predicted to occur;
one or more parameters indicative of the performance of the device for a next activation event;
one or more parameters indicative of a number of predicted activations of the smoking substitute device over a predetermined period of time;
the number of predicted activations of the smoking substitute device over a predetermined period of time

9. A smoking substitute device according to any previous claim, wherein the smoking substitute device is configured to change at least one configuration setting of the smoking substitute device, based on the one or more predicted parameters, subject to input from a user of the smoking substitute device by:
suggesting one or more changes to at least one configuration setting of the smoking substitute device, based on the one or more predicted parameters, to the user of the smoking substitute device;
if the user gives permission for a suggested change to be made, implementing the suggested change.

10. A smoking substitute device according to any previous claim, wherein the smoking substitute device includes at least one feedback device, wherein the smoking substitute device is configured to use the at least one feedback device to provide feedback to the user based on the one or more predicted parameters;
wherein the one or more predicted parameters include a time at which or a range of times in which an empty battery event is predicted to occur, and the smoking substitute device is configured to use the at least one feedback device to:
provide the user with information informing the user of the predicted time or range of times; and/or
prompt a user to charge their device, based on the predicted time or range of times.

11. A smoking substitute device according to any previous claim, wherein the one or more predicted parameters include a time at which or a range of times in which an empty battery event is predicted to occur, and the smoking substitute device is configured to use the at least one feedback device to:
suggest one or more changes to the configuration settings of the smoking substitute device to reduce the power consumption of the device;
implement any of the one or more suggested changes to the configuration settings of the smoking substitute device that are selected by the user.

12. A smoking substitute device according to any previous claim, wherein the one or more predicted parameters include a time at which or a range of times in which, a next activation event is predicted to occur, and the smoking substitute device is configured to use the at least one feedback device to:
if the device is not used by that time or by the end of the range of times, prompt the user to use their smoking substitute device.

13. A smoking substitute device according to any previous claim, wherein the one or more predicted parameters include a time at which or a range of times in which an empty consumable event is predicted to occur, and the smoking substitute device is configured to use the at least one feedback device to:
provide feedback to the user to inform the user of the predicted time or range of times.

14. A smoking substitute device according to any previous claim, wherein the one or more predicted parameters include one or more parameters indicative of the performance of the device for a next activation event, and the smoking substitute device is configured to:
compare the one or more parameters indicative of the performance of the device for a next activation event with one or more predetermined parameters indicative of an optimal performance of the smoking substitute device for a next activation event;
if the one or more parameters indicative of the performance of the device for a next activation event do not match the corresponding one or more predetermined parameters indicative of an optimal performance of the smoking substitute device for a next activation event:
adjust one or more of the configuration settings of the smoking substitute device to adjust the one or more parameters indicative of the performance of the device for a next activation event;
repeat the comparison of the one or more parameters indicative of the performance of the device for a next activation event with one or more predetermined parameters indicative of an optimal performance of the smoking substitute device for a next activation event and corresponding adjustment of the one or more parameters indicative of the performance of the smoking substitute device for a next activation event until the one or more parameters indicative of the performance of the device for a next activation event match the corresponding one or more predetermined parameters indicative of an optimal performance of the smoking substitute device for a next activation event;
if the one or more parameters indicative of the performance of the device for a next activation event do match the corresponding one or more predetermined parameters indicative of an optimal performance of the smoking substitute device for a next activation event:
use the at least one feedback device to provide feedback to the user to inform the user that the smoking substitute device is ready for the next activation event.

15. A smoking substitute device according to any previous claim, wherein the one or more predicted parameters include one or more parameters indicative of a number of predicted activations of the smoking substitute device over a predetermined period of time, and the smoking substitute device is configured to use the at least one feedback device to:
if the number of actual activations is higher than the one or more parameters indicative of a number of predicted activations over the predetermined period of time, provide an indication to the user that their usage is higher than expected.

16. A smoking substitute device according to any previous claim, wherein the one or more predicted parameters include the number of predicted activations of the smoking substitute device over a predetermined period of time, and the smoking substitute device is configured to:
if the rate of actual activations is indicative of a higher number of actual activations over the predetermined period of time than the number of predicted activations over the predetermined period of time, reduce the amount of nicotine delivered per activation event of the smoking substitute device;
if the rate of actual activations is indicative of a lower number of actual activations over the predetermined period of time than the number of predicted activations over the predetermined period of time, increase the amount of nicotine delivered per activation event of the smoking substitute device;
if the rate of actual activations is indicative of the same number of actual activations over the predetermined period of time as the number of predicted activations over the predetermined period of time, maintain the amount of nicotine delivered per activation event of the smoking substitute device.

17. A method of operating a smoking substitute device, the smoking substitute device comprising at least one processor configured to run a machine learning model, wherein the method comprises:
the machine learning model receiving usage data relating to usage of the smoking substitute device by a user, and based on that usage data, determining one or more predicted parameters relating to future usage of the smoking substitute device by the user

18. A computer readable medium comprising a computer readable instructions configured to, when executed, cause a smoking substitute device to perform a method of operating a smoking substitute device, the smoking substitute device comprising at least one processor configured to run a machine learning model, wherein the method comprises:
the machine learning model receiving usage data relating to usage of the smoking substitute device by a user, and based on that usage data, determining one or more predicted parameters relating to future usage of the smoking substitute device by the user.
